# EUROPEAN PATENT APPLICATION

(11) **EP 3 246 806 A1**
(43) Date of publication of application: **22.11.2017**
(21) Application number: 17170378.8
(22) Date of filing: 10.05.2017
(51) Int. Cl.: G06F 3/0485, G06F 3/0488

(54) **ELECTRONIC DEVICE COMPRISING DISPLAY**

(30) Priority: 17.05.2016 KR 20160059971
(71) Applicant: Samsung Electronics Co., Ltd., Gyeonggi-do 16677 (KR)
(72) Inventor: KIM, So Young, 16688 Gyeonggi-do (KR); ROH, Wan Ho, 06715 Seoul (KR)
(74) Representative: HGF Limited

(57) **Abstract**

A method for a user interface of an electronic device and the electronic device therefor are provided. The electronic device includes a touchscreen display that is positioned on a front surface of the electronic device, a touch sensor that is positioned on one side surface of the electronic device, and at least one processor that is electrically connected with the touchscreen display and the touch sensor. The at least one processor may be configured to output a screen divided into various areas to the touchscreen display, if a touch is detected by the touch sensor, receive the touch as an event of an area which corresponds to a location at which the touch is detected, from among the various areas, and perform a specified operation in response to the event.

## Description

### CROSS-REFERENCE TO RELATED APPLICATION(S)

This application claims the benefit of a Korean patent application filed on May 17, 2016 in the Korean Intellectual Property Office and assigned Serial number 10-2016-0059971, the entire disclosure of which is hereby incorporated by reference.

### TECHNICAL FIELD

The present disclosure relates to a user interface (UI) method of an electronic device including a display.

### BACKGROUND

Nowadays, a portable electronic device, which is equipped with a display, such as a smartphone, a wearable device, or the like is widely supplied since the spread of personal computers (PC).

The display of the portable electronic device may be implemented with a touchscreen display including a resistive or a capacitive touch panel. The touchscreen display may perform a role as an input device that receives a user manipulation, in addition to a role as a visual display device.

Meanwhile, a size of the touchscreen display mounted in the portable electronic device (e.g., a smartphone) tends to increase from about 3 inches to five inches or larger to cope with demands of users.

As a method of using the portable electronic device, a user may grip the portable electronic device with one hand and may perform various touch operations with the other hand (so-called two-hand operation). Alternatively, to use the portable electronic device, the user may grip the portable electronic device with one hand and may perform various touch operations with the same hand (so-called one-hand operation).

However, since a size of a display mounted in the portable electronic device tends to become larger, it may not be easy for even a large size adult man to operate the portable electronic device with one hand, not to mention other users, that may have relatively smaller size hands, such as children and average size women.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a user interface (UI) method using a side surface of an electronic device and the electronic device performing the same.

In accordance with an aspect of the present disclosure, an electronic device is provided. The electronic device includes a housing including a first surface facing in a first direction, a second surface facing in a second direction opposite from the first direction, and a side surface surrounding at least a portion of space between the first surface and the second surface, a touchscreen display interposed between the first and second surfaces, and exposed through the first surface, a pressure sensor interposed between the first and second surfaces, at least one processor positioned inside the housing, and electrically coupled to the touchscreen display and the pressure sensor, and a memory positioned inside the housing, and electrically coupled to the at least one processor. The memory may store instructions that, when executed, cause the at least one processor to control the touchscreen display to display a screen, allow the pressure sensor to detect pressure exerted by an external object on at least a portion of the side surface, and upon the detection of the pressure, scroll at least a portion of the displayed screen in a specified direction.

In accordance with another aspect of the present disclosure, an electronic device is provided. The electronic device includes a touchscreen display positioned on a front surface of the electronic device, a touch sensor positioned on one side surface of the electronic device, at least one processor electrically connected with the touchscreen display and the touch sensor. The at least one processor may be configured to control the touchscreen display to output a screen divided into a plurality of areas, if a touch is detected by the touch sensor, receive the touch as an event of an area which corresponds to a location at which the touch is detected, from among the plurality of areas, and perform a specified operation in response to the event.

In accordance with another aspect of the present disclosure, a method for a user interface of an electronic device including a touch sensor positioned on a side surface thereof may include outputting a screen divided into a plurality of areas to a touchscreen display, if a touch is detected by the touch sensor, receiving the touch as an event of an area, which corresponds to a location at which the touch is detected, from among the plurality of areas, and performing a specified operation in response to the event.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates an electronic device according to various embodiments of the present disclosure;
FIG. 2 illustrates a block diagram of the electronic device according to various embodiments of the present disclosure;
FIG. 3 illustrates a block diagram of a program module according to various embodiments of the present disclosure;
FIG. 4A illustrates an appearance of the electronic device according to an embodiment of the present disclosure;
FIG. 4B illustrates an appearance of the electronic device according to another embodiment of the present disclosure;
FIG. 5A illustrates a stacked structure of a display according to an embodiment of the present disclosure;
FIG. 5B is a view for describing a structure of a side-surface sensing area according to an embodiment of the present disclosure;
FIG. 5C is a view for describing a structure of a sensing area according to another embodiment of the present disclosure;
FIG. 6A illustrates a block diagram of the electronic device according to an embodiment of the present disclosure;
FIG. 6B is a view for describing an operation of the electronic device according to an embodiment of the present disclosure;
FIG. 6C is a view for describing a touch according to various embodiments of the present disclosure;
FIG. 7A illustrates a flowchart of a user interface (UI) method of the electronic device according to an embodiment of the present disclosure;
FIG. 7B illustrates a flowchart of the UI method of the electronic device according to an embodiment of the present disclosure;
FIG. 8 is a view for describing a UI method of a web browser application according to an embodiment of the present disclosure;
FIG. 9 is a view for describing a UI method of a web browser application according to another embodiment of the present disclosure;
FIG. 10 is a view for describing a UI method of a home application according to an embodiment of the present disclosure;
FIG. 11 is a view for describing a UI method of an e-book application according to an embodiment of the present disclosure; and
FIG. 12 is a view for describing a UI method of a message application according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, description of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the present disclosure, the expressions "have", "may have", "include" and "comprise", or "may include" and "may comprise" indicate existence of corresponding features (e.g., elements such as numeric values, functions, operations, or components) but do not exclude presence of additional features.

In the present disclosure, the expressions "A or B", "at least one of A or/and B", or "one or more of A or/and B", and the like may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used in the present disclosure may be used to refer to various elements regardless of the order and/or the priority and to distinguish the relevant elements from other elements, but do not limit the elements. For example, "a first user device" and "a second user device" indicate different user devices regardless of the order or the priority. For example, without departing the scope of the present disclosure, a first element may be referred to as a second element, and similarly, a second element may be referred to as a first element.

It will be understood that when an element (e.g., a first element) is referred to as being "(operatively or communicatively) coupled with/to" or "connected to" another element (e.g., a second element), it may be directly coupled with/to or connected to the other element or an intervening element (e.g., a third element) may be present. In contrast, when an element (e.g., a first element) is referred to as being "directly coupled with/to" or "directly connected to" another element (e.g., a second element), it should be understood that there are no intervening element (e.g., a third element).

According to the situation, the expression "configured to" used in the present disclosure may be used as, for example, the expression "suitable for", "having the capacity to", "designed to", "adapted to", "made to", or "capable of". The term "configured to" must not mean only "specifically designed to" in hardware. Instead, the expression "a device configured to" may mean that the device is "capable of" operating together with another device or other components. For example, a "processor configured to (or set to) perform A, B, and C" may mean a dedicated processor (e.g., an embedded processor) for performing a corresponding operation or a generic-purpose processor (e.g., a central processing unit (CPU) or an application processor (AP)) which performs corresponding operations by executing one or more software programs which are stored in a memory device.

Terms used in the present disclosure are used to describe specified embodiments and are not intended to limit the scope of another embodiment. All the terms used herein, which include technical or scientific terms, may have the same meaning that is generally understood by those skilled in the art. It will be further understood that terms, which are defined in a dictionary and commonly used, should also be interpreted as being customary in the relevant art and not in an idealized or overly formal unless expressly so defined in various embodiments of the present disclosure. In some cases, even if certain terms are defined in the present disclosure, they may not be interpreted to exclude embodiments of the present disclosure.

An electronic device according to various embodiments of the present disclosure may include at least one of smartphones, tablet personal computers (PCs), mobile phones, video telephones, electronic book readers, desktop PCs, laptop PCs, netbook computers, workstations, servers, personal digital assistants (PDAs), portable multimedia players (PMPs), Moving Picture Experts Group (MPEG-1 or MPEG-2) audio layer-3 (MP3) players, mobile medical devices, cameras, or wearable devices. According to various embodiments of the present disclosure, the wearable device may include at least one of an accessory type (e.g., watches, rings, bracelets, anklets, necklaces, glasses, contact lens, or head-mounted-devices (HMDs), a fabric or garment-integrated type (e.g., an electronic apparel), a body-attached type (e.g., a skin pad or tattoos), or a bio-implantable type (e.g., an implantable circuit).

According to various embodiments of the present disclosure, the electronic device may be a home appliance. The home appliances may include at least one of, for example, televisions (TVs), digital versatile disc (DVD) players, audios, refrigerators, air conditioners, cleaners, ovens, microwave ovens, washing machines, air cleaners, set-top boxes, home automation control panels, security control panels, TV boxes (e.g., Samsung HomeSync^{™}, Apple TV^{™}, and Google TV^{™}), game consoles (e.g., Xbox^{™} and PlayStation^{™}), electronic dictionaries, electronic keys, camcorders, electronic picture frames, and the like.

According to another embodiment of the present disclosure, an electronic device may include at least one of various medical devices (e.g., various portable medical measurement devices (e.g., a blood glucose monitoring device, a heartbeat measuring device, a blood pressure measuring device, a body temperature measuring device, and the like), a magnetic resonance angiography (MRA), a magnetic resonance imaging (MRI), a computed tomography (CT), scanners, and ultrasonic devices), navigation devices, global navigation satellite system (GNSS), event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller's machines (ATMs), points of sales (POSs) of stores, or internet of things (e.g., light bulbs, various sensors, electric or gas meters, sprinkler devices, fire alarms, thermostats, street lamps, toasters, exercise equipment, hot water tanks, heaters, boilers, and the like).

According to an embodiment of the present disclosure, the electronic device may include at least one of parts of furniture or buildings/structures, electronic boards, electronic signature receiving devices, projectors, or various measuring instruments (e.g., water meters, electricity meters, gas meters, or wave meters, and the like). According to various embodiments of the present disclosure, the electronic device may be one of the above-described devices or a combination thereof. An electronic device according to an embodiment may be a flexible electronic device. Furthermore, an electronic device according to an embodiment of the present disclosure may not be limited to the above-described electronic devices and may include other electronic devices and new electronic devices according to the development of technologies.

Hereinafter, electronic devices according to various embodiments will be described with reference to the accompanying drawings. In the present disclosure, the term "user" may refer to a person who uses an electronic device or may refer to a device (e.g., an artificial intelligence electronic device) that uses the electronic device.

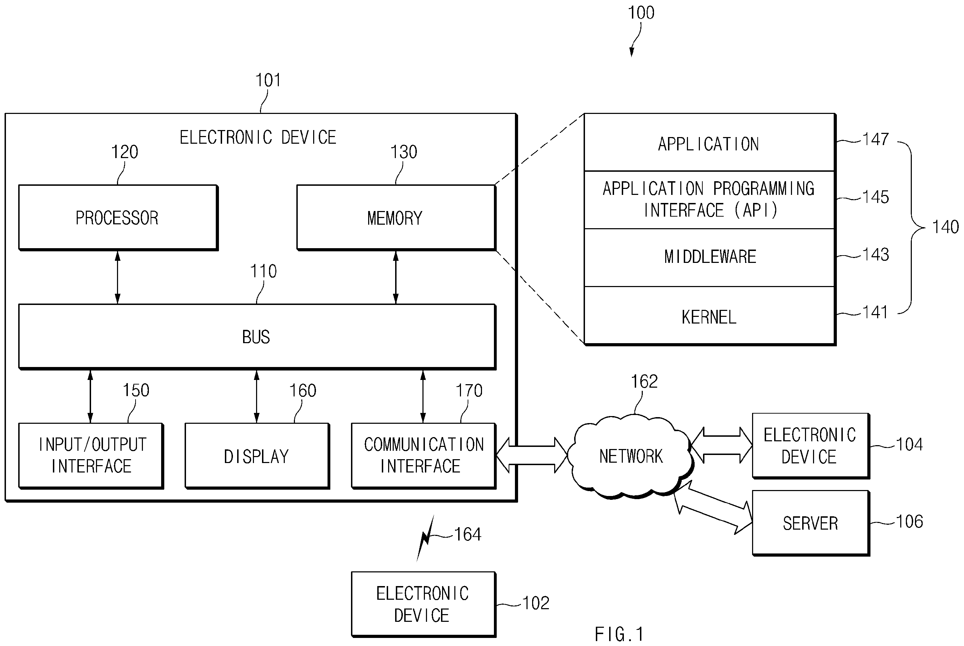

FIG. 1 illustrates a block diagram 100 of an electronic device according to various embodiments of the present disclosure.

Referring to FIG. 1, according to various embodiments of the present disclosure, an electronic device 101, 102, or 104 or a server 106 may be connected with each other over a network 162 or a short-range communication 164. The electronic device 101 may include a bus 110, a processor 120, a memory 130, an input/output interface 150, a display 160, and a communication interface 170. According to an embodiment, the electronic device 101 may not include at least one of the above-described elements or may further include other element(s).

For example, the bus 110 may interconnect the above-described elements 110 to 170 and may include a circuit for conveying communications (e.g., a control message and/or data) among the above-described elements.

The processor 120 may include one or more of a central processing unit (CPU), an application processor (AP), or a communication processor (CP). For example, the processor 120 may perform an arithmetic operation or data processing associated with control and/or communication of at least one other element(s) of the electronic device 101.

The memory 130 may include a volatile and/or nonvolatile memory. For example, the memory 130 may store instructions or data associated with at least one other element(s) of the electronic device 101. According to an embodiment of the present disclosure, the memory 130 may store software and/or a program 140. The program 140 may include, for example, a kernel 141, a middleware 143, an application programming interface (API) 145, and/or an application program (or "an application") 147. At least a part of the kernel 141, the middleware 143, or the API 145 may be referred to as an "operating system (OS)".

For example, the kernel 141 may control or manage system resources (e.g., the bus 110, the processor 120, the memory 130, and the like) that are used to execute operations or functions of other programs (e.g., the middleware 143, the API 145, and the application program 147). Furthermore, the kernel 141 may provide an interface that allows the middleware 143, the API 145, or the application program 147 to access discrete elements of the electronic device 101 so as to control or manage system resources.

The middleware 143 may perform, for example, a mediation role such that the API 145 or the application program 147 communicates with the kernel 141 to exchange data.

Furthermore, the middleware 143 may process one or more task requests received from the application program 147 according to a priority. For example, the middleware 143 may assign the priority, which makes it possible to use a system resource (e.g., the bus 110, the processor 120, the memory 130, or the like) of the electronic device 101, to at least one of the application program 147. For example, the middleware 143 may process the one or more task requests according to the priority assigned to the at least one, which makes it possible to perform scheduling or load balancing on the one or more task requests.

The API 145 may be, for example, an interface through which the application program 147 controls a function provided by the kernel 141 or the middleware 143, and may include, for example, at least one interface or function (e.g., an instruction) for a file control, a window control, image processing, a character control, or the like.

The input/output interface 150 may play a role, for example, of an interface which transmits an instruction or data input from a user or another external device, to other element(s) of the electronic device 101. Furthermore, the input/output interface 150 may output an instruction or data, received from other element(s) of the electronic device 101, to a user or another external device.

The display 160 may include, for example, a liquid crystal display (LCD), a light-emitting diode (LED) display, an organic LED (OLED) display, a microelectromechanical systems (MEMS) display, or an electronic paper display. The display 160 may display, for example, various contents (e.g., a text, an image, a video, an icon, a symbol, and the like) to a user. The display 160 may include a touch screen and may receive, for example, a touch, gesture, proximity, or hovering input using an electronic pen or a part of a user's body.

For example, the communication interface 170 may establish communication between the electronic device 101 and an external device (e.g., the first external electronic device 102, the second external electronic device 104, or the server 106). For example, the communication interface 170 may be connected to the network 162 over wireless communication or wired communication to communicate with the external device (e.g., the second external electronic device 104 or the server 106).

The wireless communication may include cellular communication employing at least one of, for example, long-term evolution (LTE), LTE advanced (LTE-A), code division multiple access (CDMA), wideband CDMA (WCDMA), universal mobile telecommunications system (UMTS), wireless broadband (WiBro), global system for mobile communications (GSM), or the like, as cellular communication protocol. According to an embodiment of the present disclosure, the wireless communication may include, for example, at least one of Wi-Fi, bluetooth (BT), near field communication (NFC), magnetic stripe transmission (MST), radio frequency (RF), a body area network (BAN), and a global navigation satellite system (GNSS).

The MST may generate a pulse in response to transmission data using an electromagnetic signal, and the pulse may generate a magnetic field signal. The electronic device 101 may transfer the magnetic field signal to point of sale (POS), and the POS may detect the magnetic field signal using a MST reader. The POS may recover the data by converting the detected magnetic field signal to an electrical signal.

The GNSS may include at least one of, for example, a global positioning system (GPS), a global navigation satellite system (GLONASS), a BeiDou navigation satellite system (BeiDou), or a European global satellite-based navigation system (Galileo) based on an available region, a bandwidth, or the like. Hereinafter, in the present disclosure, "GPS" and "GNSS" may be interchangeably used. The wired communication may include at least one of, for example, a universal serial bus (USB), a high definition multimedia interface (HDMI), a recommended standard-232 (RS-232), a plain old telephone service (POTS), or the like. The network 162 may include at least one of telecommunications networks, for example, a computer network (e.g., local area network (LAN) or wide area network (WAN)), an Internet, or a telephone network.

Each of the first and second external electronic devices 102 and 104 may be a device of which the type is different from or the same as that of the electronic device 101. According to an embodiment of the present disclosure, the server 106 may include a group of one or more servers. According to various embodiments of the present disclosure, all or a portion of operations performed in the electronic device 101 may be executed by another or plural electronic devices (e.g., the electronic devices 102 and 104 or the server 106). According to an embodiment of the present disclosure, in the case where the electronic device 101 executes any function or service automatically or in response to a request, the electronic device 101 may not perform the function or the service internally, but, alternatively additionally, it may request at least a portion of a function associated with the electronic device 101 at another device (e.g., the electronic device 102 or 104 or the server 106). The other electronic device (e.g., the electronic device 102 or 104 or the server 106) may execute the requested function or additional function and may transmit the execution result to the electronic device 101. The electronic device 101 may provide the requested function or service using the received result or may additionally process the received result to provide the requested function or service. To this end, for example, cloud computing, distributed computing, or client-server computing may be used.

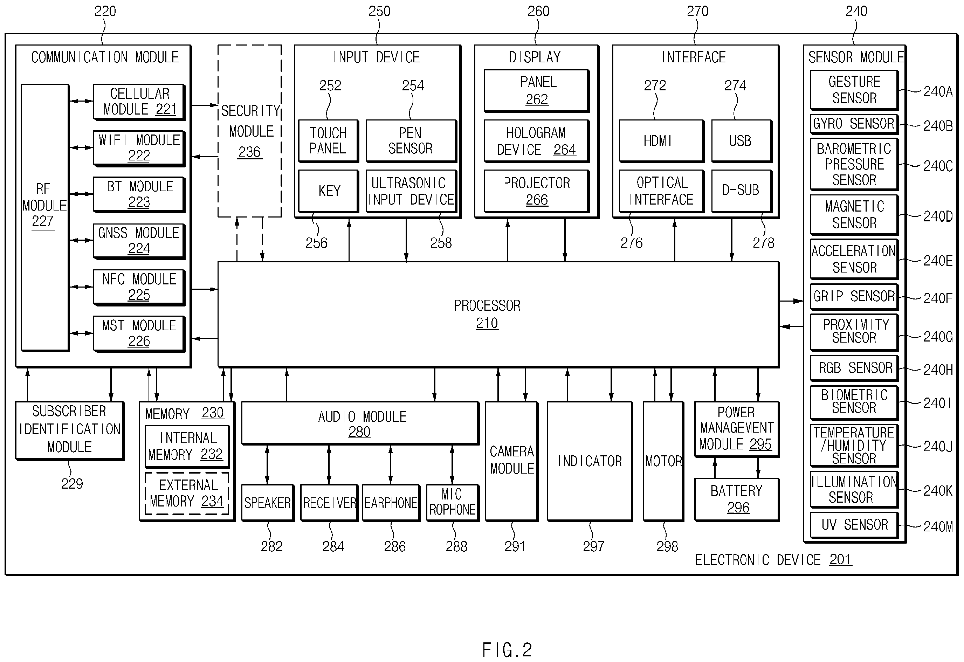

FIG. 2 illustrates a block diagram of an electronic device according to various embodiments of the present disclosure.

Referring to FIG. 2, an electronic device 201 may include, for example, an entire part or a part of the electronic device 101 illustrated in FIG. 1. The electronic device 201 may include one or more processors (e.g., an application processor; AP) 210, a communication module 220, a subscriber identification module 229, a memory 230, a sensor module 240, an input device 250, a display 260, an interface 270, an audio module 280, a camera module 291, a power management module 295, a battery 296, an indicator 297, and a motor 298.

The processor 210 may operate, for example, an operating system (OS) or an application to control a plurality of hardware or software elements connected to the processor 210 and may process and compute a variety of data. For example, the processor 210 may be implemented with a system on chip (SoC). According to an embodiment of the present disclosure, the processor 210 may further include a graphic processing unit (GPU) and/or an image signal processor (ISP). The processor 210 may include at least a part (e.g., a cellular module 221) of elements illustrated in FIG. 2. The processor 210 may load an instruction or data, which is received from at least one of other elements (e.g., a nonvolatile memory), into a volatile memory and process the loaded instruction or data. The processor 210 may store a variety of data in the nonvolatile memory.

The communication module 220 may be configured the same as or similar to the communication interface 170 of FIG. 1. The communication module 220 may include the cellular module 221, a Wi-Fi module 222, a Bluetooth (BT) module 223, a GNSS module 224 (e.g., a GPS module, a Glonass module, a Beidou module, or a Galileo module), a near field communication (NFC) module 225, a MST module 226, and a radio frequency (RF) module 227.

The cellular module 221 may provide, for example, voice communication, video communication, a character service, an Internet service, or the like over a communication network. According to an embodiment of the present disclosure, the cellular module 221 may perform discrimination and authentication of the electronic device 201 within a communication network by using the subscriber identification module (e.g., a subscriber identification module (SIM) card) 229. According to an embodiment of the present disclosure, the cellular module 221 may perform at least a portion of functions that the processor 210 provides. According to an embodiment of the present disclosure, the cellular module 221 may include a communication processor (CP).

Each of the Wi-Fi module 222, the BT module 223, the GNSS module 224, the NFC module 225, or the MST module 226 may include a processor for processing data exchanged through a corresponding module, for example. According to an embodiment of the present disclosure, at least a part (e.g., two or more) of the cellular module 221, the Wi-Fi module 222, the BT module 223, the GNSS module 224, the NFC module 225, or the MST module 226 may be included within one integrated circuit (IC) or an IC package.

For example, the RF module 227 may transmit and receive a communication signal (e.g., an RF signal). For example, the RF module 227 may include a transceiver, a power amplifier module (PAM), a frequency filter, a low noise amplifier (LNA), an antenna, or the like. According to another embodiment of the present disclosure, at least one of the cellular module 221, the Wi-Fi module 222, the BT module 223, the GNSS module 224, the NFC module 225, or the MST module 226 may transmit and receive an RF signal through a separate RF module.

The subscriber identification module 229 may include, for example, a card and/or embedded SIM that includes a subscriber identification module and may include unique identify information (e.g., integrated circuit card identifier (ICCID)) or subscriber information (e.g., integrated mobile subscriber identity (IMSI)).

The memory 230 (e.g., the memory 130) may include an internal memory 232 or an external memory 234. For example, the internal memory 232 may include at least one of a volatile memory (e.g., a dynamic random-access memory (DRAM), a static RAM (SRAM), a synchronous DRAM (SDRAM), or the like), a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory or a NOR flash memory), or the like), a hard drive, or a solid state drive (SSD).

The external memory 234 may further include a flash drive such as compact flash (CF), secure digital (SD), micro secure digital (Micro-SD), mini secure digital (Mini-SD), extreme digital (xD), a multimedia card (MMC), a memory stick, or the like. The external memory 234 may be operatively and/or physically connected to the electronic device 201 through various interfaces.

A security module 236 may be a module that includes a storage space of which a security level is higher than that of the memory 230 and may be a circuit that guarantees safe data storage and a protected execution environment. The security module 236 may be implemented with a separate circuit and may include a separate processor. For example, the security module 236 may be in a smart chip or a secure digital (SD) card, which is removable, or may include an embedded secure element (eSE) embedded in a fixed chip of the electronic device 201. Furthermore, the security module 236 may operate based on an operating system (OS) that is different from the OS of the electronic device 201. For example, the security module 236 may operate based on java card open platform (JCOP) OS.

The sensor module 240 may measure, for example, a physical quantity or may detect an operation state of the electronic device 201. The sensor module 240 may convert the measured or detected information to an electric signal. For example, the sensor module 240 may include at least one of a gesture sensor 240A, a gyro sensor 240B, a barometric pressure sensor 240C, a magnetic sensor 240D, an acceleration sensor 240E, a grip sensor 240F, the proximity sensor 240G, a color sensor 240H (e.g., red, green, blue (RGB) sensor), a biometric sensor 240I, a temperature/humidity sensor 240J, an illuminance sensor 240K, or an ultraviolet (UV) sensor 240M. Although not illustrated, additionally or generally, the sensor module 240 may further include, for example, an electronic nose (E-nose) sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 240 may further include a control circuit for controlling at least one or more sensors included therein. According to an embodiment of the present disclosure, the electronic device 201 may further include a processor that is a part of the processor 210 or independent of the processor 210 and is configured to control the sensor module 240. The processor may control the sensor module 240 while the processor 210 remains at a sleep state.

The input device 250 may include, for example, a touch panel 252, a (digital) pen sensor 254, a key 256, or an ultrasonic input device 258. For example, the touch panel 252 may use at least one of capacitive, resistive, infrared (IR) and ultrasonic detecting methods. Also, the touch panel 252 may further include a control circuit. The touch panel 252 may further include a tactile layer to provide a tactile reaction to a user.

The (digital) pen sensor 254 may be, for example, a part of a touch panel or may include an additional sheet for recognition. The key 256 may include, for example, a physical button, an optical key, or a keypad. The ultrasonic input device 258 may detect (or sense) an ultrasonic signal, which is generated from an input device, through a microphone (e.g., a microphone 288) and may check data corresponding to the detected ultrasonic signal.

The display 260 (e.g., the display 160) may include a panel 262, a hologram device 264, or a projector 266. The panel 262 may be the same as or similar to the display 160 illustrated in FIG. 1. The panel 262 may be implemented, for example, to be flexible, transparent or wearable. The panel 262 and the touch panel 252 may be integrated into a single module. The hologram device 264 may display a stereoscopic image in a space using a light interference phenomenon. The projector 266 may project light onto a screen so as to display an image. For example, the screen may be arranged in the inside or the outside of the electronic device 201. According to an embodiment of the present disclosure, the panel 262 may include a pressure sensor (or force sensor) that measures the intensity of touch pressure by a user. The pressure sensor may be implemented integrally with the touch panel 252, or may be implemented as at least one sensor separately from the touch panel 252. According to an embodiment of the present disclosure, the display 260 may further include a control circuit for controlling the panel 262, the hologram device 264, or the projector 266.

The interface 270 may include, for example, a high-definition multimedia interface (HDMI) 272, a universal serial bus (USB) 274, an optical interface 276, or a D-subminiature (D-sub) 278. The interface 270 may be included, for example, in the communication interface 170 illustrated in FIG. 1. Additionally or generally, the interface 270 may include, for example, a mobile high definition link (MHL) interface, a SD card/multi-media card (MMC) interface, or an infrared data association (IrDA) standard interface.

The audio module 280 may convert a sound and an electric signal in dual directions. At least a part of the audio module 280 may be included, for example, in the input/output interface 150 illustrated in FIG. 1. The audio module 280 may process, for example, sound information that is input or output through a speaker 282, a receiver 284, an earphone 286, or the microphone 288.

For example, the camera module 291 may shoot a still image or a video. According to an embodiment of the present disclosure, the camera module 291 may include at least one or more image sensors (e.g., a front sensor or a rear sensor), a lens, an image signal processor (ISP), or a flash (e.g., an LED or a xenon lamp).

The power management module 295 may manage, for example, power of the electronic device 201. According to an embodiment of the present disclosure, a power management integrated circuit (PMIC), a charger IC, or a battery or fuel gauge may be included in the power management module 295. The PMIC may have a wired charging method and/or a wireless charging method. The wireless charging method may include, for example, a magnetic resonance method, a magnetic induction method or an electromagnetic method and may further include an additional circuit, for example, a coil loop, a resonant circuit, a rectifier, or the like. The battery gauge may measure, for example, a remaining capacity of the battery 296 and a voltage, current or temperature thereof while the battery is charged. The battery 296 may include, for example, a rechargeable battery and/or a solar battery.

The indicator 297 may display a specified state of the electronic device 201 or a part thereof (e.g., the processor 210), such as a booting state, a message state, a charging state, and the like. The motor 298 may convert an electrical signal into a mechanical vibration and may generate the following effects: vibration, haptic, and the like. Although not illustrated, a processing device (e.g., a GPU) for supporting a mobile TV may be included in the electronic device 201. The processing device for supporting the mobile TV may process media data according to the standards of digital multimedia broadcasting (DMB), digital video broadcasting (DVB), MediaFlo^{™}, or the like.

Each of the above-mentioned elements of the electronic device according to various embodiments described in the present disclosure may be configured with one or more components, and the names of the elements may be changed according to the type of the electronic device. In various embodiments of the present disclosure, the electronic device may include at least one of the above-mentioned elements, and some elements may be omitted or other additional elements may be added. Furthermore, some of the elements of the electronic device according to various embodiments may be combined with each other so as to form one entity, so that the functions of the elements may be performed in the same manner as before the combination.

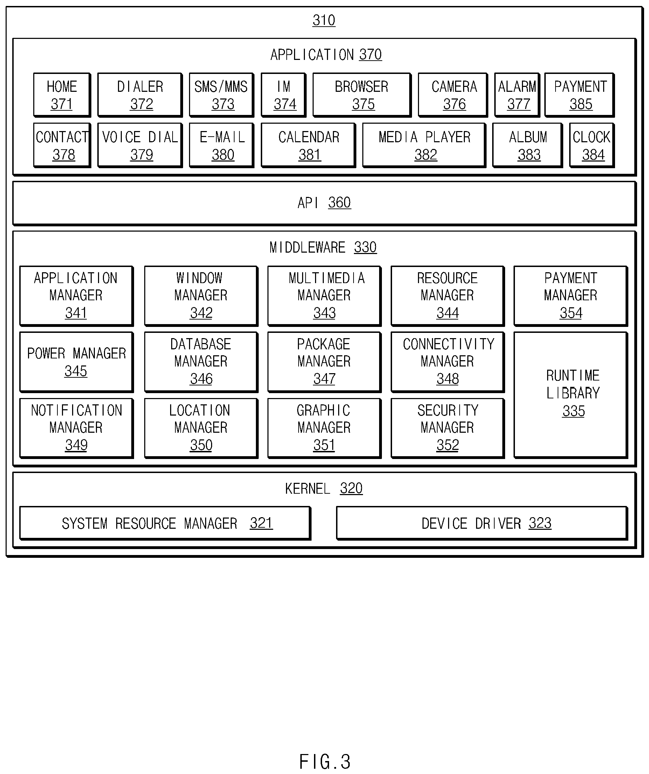

FIG. 3 illustrates a block diagram of a program module according to various embodiments of the present disclosure.

Referring to FIG. 3, a program module 310 (e.g., the program 140) may include an operating system (OS) to control resources associated with an electronic device (e.g., the electronic device 101), and/or diverse applications (e.g., the application program 147) driven on the OS. The OS may be, for example, Android^{™}, iOS^{™}, Windows^{™}, Symbian^{™}, Tizen^{™}, or Samsung Bada OS^{™}.

The program module 310 may include a kernel 320, a middleware 330, an application programming interface (API) 360, and/or an application 370. At least a portion of the program module 310 may be preloaded on an electronic device or may be downloadable from an external electronic device (e.g., the electronic device 102 or 104, the server 106, or the like).

The kernel 320 (e.g., the kernel 141) may include, for example, a system resource manager 321 or a device driver 323. The system resource manager 321 may control, allocate, or retrieve system resources. According to an embodiment of the present disclosure, the system resource manager 321 may include a process managing unit, a memory managing unit, a file system managing unit, or the like. The device driver 323 may include, for example, a display driver, a camera driver, a Bluetooth (BT) driver, a shared memory driver, a USB driver, a keypad driver, a Wi-Fi driver, an audio driver, or an inter-process communication (IPC) driver.

The middleware 330 may provide, for example, a function that the application 370 needs in common, or may provide diverse functions to the application 370 through the API 360 to allow the application 370 to efficiently use limited system resources of the electronic device. According to an embodiment of the present disclosure, the middleware 330 (e.g., the middleware 143) may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, a security manager 352, or a payment manager 354.

The runtime library 335 may include, for example, a library module that is used by a compiler to add a new function through a programming language while the application 370 is being executed. The runtime library 335 may perform input/output management, memory management, or capacities about arithmetic functions.

The application manager 341 may manage, for example, a life cycle of at least one application of the application 370. The window manager 342 may manage a graphic user interface (GUI) resource that is used in a screen. The multimedia manager 343 may identify a format necessary for playing diverse media files, and may perform encoding or decoding of media files by using a codec suitable for the format. The resource manager 344 may manage resources such as a storage space, memory, or source code of at least one application of the application 370.

The power manager 345 may operate, for example, with a basic input/output system (BIOS) to manage a battery or power, and may provide power information for an operation of an electronic device. The database manager 346 may generate, search for, or modify database that is to be used in at least one application of the application 370. The package manager 347 may install or update an application that is distributed in the form of package file.

The connectivity manager 348 may manage, for example, wireless connection such as Wi-Fi or Bluetooth (BT). The notification manager 349 may display or notify an event such as arrival message, appointment, or proximity notification in a mode that does not disturb a user. The location manager 350 may manage location information about an electronic device. The graphic manager 351 may manage a graphic effect that is provided to a user, or manage a user interface relevant thereto. The security manager 352 may provide a general security function necessary for system security, user authentication, or the like. According to an embodiment of the present disclosure, in the case where an electronic device (e.g., the electronic device 101) includes a telephony function, the middleware 330 may further include a telephony manager for managing a voice or video call function of the electronic device.

The middleware 330 may include a middleware module that combines diverse functions of the above-described elements. The middleware 330 may provide a module specialized to each OS kind to provide differentiated functions. Additionally, the middleware 330 may dynamically remove a part of the preexisting elements or may add new elements thereto.

The API 360 (e.g., the API 145) may be, for example, a set of programming functions and may be provided with a configuration that is variable depending on an OS. For example, in the case where an OS is Android^{™} or iOS^{™}, it may provide one API set per platform. In the case where an OS is Tizen^{™}, it may provide two or more API sets per platform.

The application 370 (e.g., the application program 147) may include, for example, one or more applications capable of providing functions for a home 371, a dialer 372, an short message service (SMS)/multimedia messaging service (MMS) 373, an instant message (IM) 374, a browser 375, a camera 376, an alarm 377, a contact 378, a voice dial 379, an e-mail 380, a calendar 381, a media player 382, an album 383, a timepiece 384, a payment 385, or offering of health care (e.g., measuring an exercise quantity, blood sugar, or the like) or environment information (e.g., information of barometric pressure, humidity, temperature, or the like).

According to an embodiment of the present disclosure, the application 370 may include an application (hereinafter referred to as "information exchanging application" for descriptive convenience) to support information exchange between an electronic device (e.g., the electronic device 101) and an external electronic device (e.g., the electronic device 102 or 104). The information exchanging application may include, for example, a notification relay application for transmitting specified information to the external electronic device, or a device management application for managing the external electronic device.

For example, the notification relay application may include a function of transmitting notification information, which arise from other applications (e.g., applications for SMS/MMS, e-mail, health care, or environmental information), to an external electronic device (e.g., the electronic device 102 or 104). Additionally, the information exchanging application may receive, for example, notification information from the external electronic device and provide the notification information to a user.

The device management application may manage (e.g., install, delete, or update), for example, at least one function (e.g., turn-on/turn-off of an external electronic device itself (or a part of components) or adjustment of brightness (or resolution) of a display) of the external electronic device (e.g., the electronic device 102 or 104) which communicates with the electronic device, an application running in the external electronic device, or a service (e.g., a call service, a message service, or the like) provided from the external electronic device.

According to an embodiment of the present disclosure, the application 370 may include an application (e.g., a health care application of a mobile medical device) that is assigned in accordance with an attribute of an external electronic device (e.g., the electronic device 102 or 104). According to an embodiment, the application 370 may include an application that is received from the external electronic device (e.g., the server 106 or the electronic device 102 or 104). According to an embodiment, the application 370 may include a preloaded application or a third-party application that is downloadable from a server. The names of elements of the program module 310 according to the embodiment may be modifiable depending on kinds of operating systems (OSs).

According to various embodiments of the present disclosure, at least a portion of the program module 310 may be implemented by software, firmware, hardware, or a combination of two or more thereof. At least a portion of the program module 310 may be implemented (e.g., executed), for example, by the processor (e.g., the processor 210). At least a portion of the program module 310 may include, for example, modules, programs, routines, sets of instructions, processes, or the like for performing one or more functions.

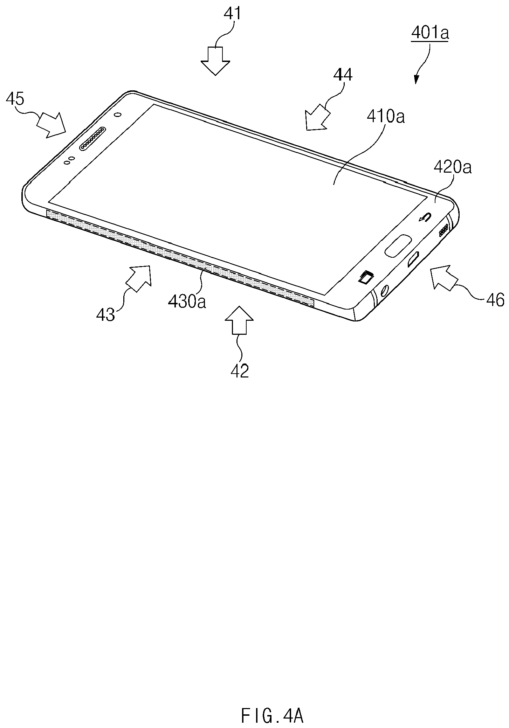

FIG. 4A illustrates an appearance of an electronic device according to an embodiment of the present disclosure.

Referring to FIG. 4A, an electronic device 401a according to an embodiment may include a display 410a and a housing 420a in appearance. Various circuits or modules such as a processor, a memory, and the like may be positioned inside the electronic device 401a (i.e., inside the housing 420a).

The display 410a may be positioned on a front surface of the electronic device 401a. For example, inside the electronic device 401 a, the display 410a may be interposed between a front surface (first surface) facing an upper direction (first direction) 41 and a rear surface (second surface) facing a lower direction (second direction) 42 and may be exposed to the outside through the front surface.

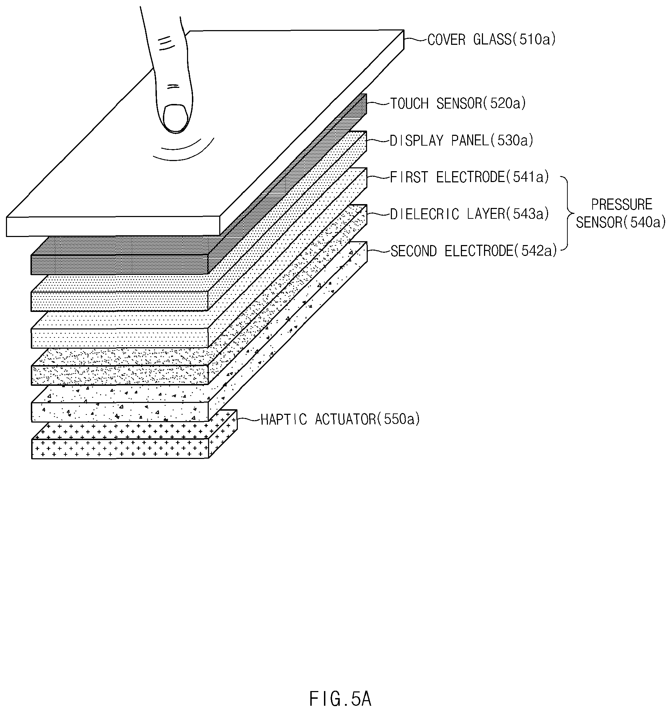

The display 410a may output content (e.g., a text, an image, a video, an icon, a widget, a symbol, or the like) or may receive a touch input (including a touch, a hovering, and a "force touch") from a user. To this end, the display 410a may include a cover glass, a display panel, a touch panel, and/or a pressure sensor, for example. The cover glass, the display panel, the touch panel, and/or the pressure sensor may have areas (e.g., substantially the same area) corresponding to each other and may be positioned to be stacked (refer to FIG. 5A to 5C).

The housing 420a may constitute at least a portion of an appearance of the electronic device 401a. For example, the housing 420a may include the front surface (first surface) facing the upper direction (first direction) 41, the rear surface (second surface) opposite from the front surface, and a side surface surrounding at least a partial space between the front surface (first surface) and the rear surface (second surface). The side surface may include a left-side surface facing a left-side direction (third direction) 43, a right-side surface facing a right-side direction (fourth direction) 44, an upper-side surface facing an upper-side direction (fifth direction) 45, and a bottom-side surface facing a bottom-side direction (sixth direction) 46.

To protect various elements inside the electronic device 401a from external impact or dust, the housing 420a may be formed of a plastic injection-molding material, a conductive material (e.g., metal), or any combinations thereof. According to an embodiment of the present disclosure, the housing 420a may be used as meaning indicating outer surfaces of a plurality of elements. For example, the front surface of the housing 420a may correspond to the cover glass, the side surface of the housing 420a may correspond to a side member of a rear case (or a rear plate), and the rear surface of the housing 420a may correspond to a back cover of a battery.

According to an embodiment of the present disclosure, a touch sensor and/or a pressure sensor may be positioned in a sensing area 430a of one side surface of the electronic device 401a, for example, one side surface of the housing 420a. For example, the touch sensor and/or the pressure sensor positioned in the sensing area 430a may detect a touch on at least a portion of the side surface of the housing 420a and/or pressure of the touch.

According to an embodiment of the present disclosure, the sensing area 430a may have a length corresponding to (substantially the same as) a vertical length of the display 410a. For example, in the case where the touch sensor and/or the pressure sensor is implemented in the form of a panel, each panel may have a length corresponding to the vertical length of the display 410a. Although not illustrated in FIG. 4A, the sensing area 430a may be defined on a right side surface of the electronic device 401 a as well as a left-side surface of the electronic device 401 a.

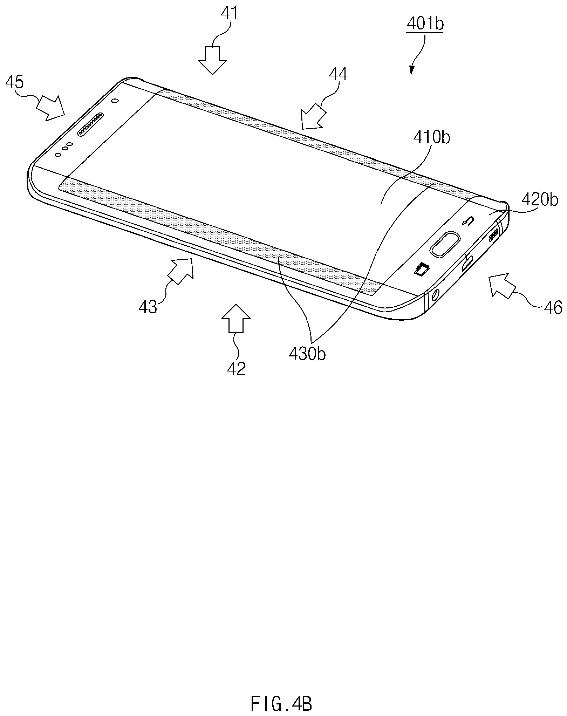

FIG. 4B illustrates an appearance of an electronic device according to another embodiment of the present disclosure.

Referring to FIG. 4B, as in the electronic device 401a illustrated in FIG. 4A, an electronic device 401b according to an embodiment may include a display 410b and a housing 420b in appearance. Various circuits or modules such as a processor, a memory, and the like may be positioned inside the electronic device 401b (i.e., inside the housing 420b). With regard to FIG. 4A, a duplicated description may be omitted.

According to various embodiments of the present disclosure, the display 410b may be positioned on a front surface of the electronic device 401b and may further extend to at least one side surface from the front surface. For example, the display 410b may extend in the left-side direction 43 and/or the right-side direction 44. Since the display 410b extends in the left-side direction 43 and/or the right-side direction 44, the display 410b may be exposed to the outside through the left-side and right-side surfaces as well as the front surface.

According to various embodiments of the present disclosure, the housing 420b may constitute at least a portion of an appearance of the electronic device 401b. For example, the housing 420b may include a front surface facing the upper direction 41, a rear surface facing the front surface, and a side surface surrounding a space of a thickness direction between the front surface and the rear surface. The side surface may include a left-side surface facing the left-side direction 43, a right-side surface facing the right-side direction 44, an upper-side surface facing the upper-side direction and a bottom-side surface facing the bottom-side direction 46. In this case, the left-side surface and the right-side surface of the housing 420b may constitute an appearance of left-side and right-side surfaces of the electronic device 401b together with the side-surface area 430b of the display 410b.

According to an embodiment of the present disclosure, a touch sensor and/or a pressure sensor may be positioned in the extended side-surface area 430b of the display 410b. For example, the touch sensor and/or the pressure sensor may be positioned on or under a display corresponding to the side-surface area 430b extending to one side surface so as to be overlaid. The touch sensor and/or the pressure sensor positioned in the side-surface area 430b of the display 410b may detect a touch on at least a portion of the side-surface area 430b of the display 410b and/or pressure of the touch.

According to an embodiment of the present disclosure, the side-surface area 430b of the display 410b may have a length corresponding to (substantially the same as) a vertical length of the display 410b. For example, in the case where the touch sensor and/or the pressure sensor is implemented in the form of a panel, each panel may have a length corresponding to the vertical length of the display 410b.

FIG. 5A illustrates a stacked structure of a display according to an embodiment of the present disclosure.

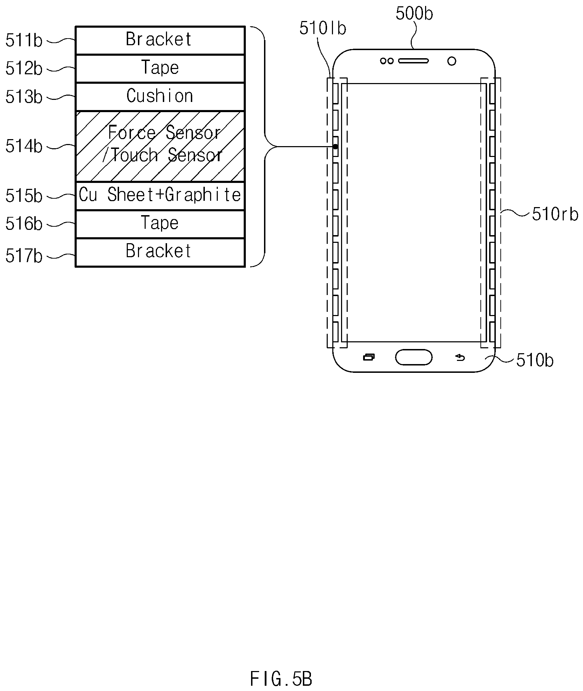

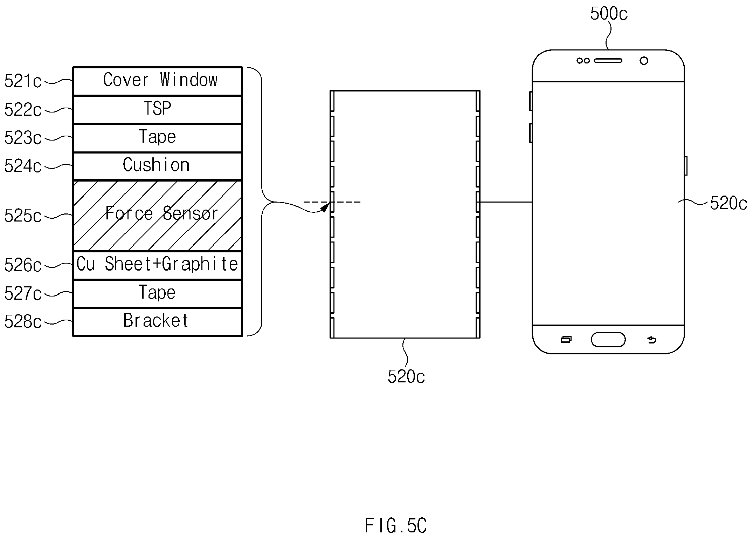

Referring to FIG. 5A, a stacked structure of a display according to an embodiment is illustrated. For example, the stacked structure may be applied to the display 410a illustrated in FIG. 4A or the display 410b illustrated in FIG. 4B (additionally, refer to FIG. 5C). Also, some of elements 510a to 550a illustrated in FIG. 5A may not be included in the sensing area 430a illustrated in FIG. 4A. For example, a display panel 530a may not be included in the sensing area 430a illustrated in FIG. 4A, and a cover glass 510a may be replaced with a specified housing (additionally, refer to FIG. 5B).

In the stacked structure of the display according to an embodiment of the present disclosure, the cover glass 510a may pass light generated by the display panel 530a. A user may touch a portion (e.g., a finger) of his/her body on the cover glass 510a to perform a "touch" (including a contact using an electronic pen). The cover glass 510a may include a tampered glass, reinforced plastic, or a flexible polymeric material. Accordingly, it may be possible to protect a display and an electronic device equipped with the display from an external impact. According to various embodiments, the cover glass 510a may be also referred to as a "glass window" or "cover window".

According to various embodiments of the present disclosure, in a touch sensor 520a, a specified physical quantity (e.g., a voltage, the intensity of light, resistance, the amount of charges, or capacitance) may vary due to a touch from the user. For example, the touch sensor 520a may include a capacitive touch panel, a pressure sensitive touch panel (e.g., a resistive touch panel), an infrared (IR) touch panel, a piezo touch panel, or the like, for example. According to various embodiments of the present disclosure, the touch sensor 520a may be referred to as various names, such as a touch panel and the like, based on an implementation shape.

According to various embodiments of the present disclosure, the display panel 530a may output content (e.g., a text, an image, a video, an icon, a widget, a symbol, or the like). For example, the display panel 530a may include a liquid crystal display (LCD) panel, a light-emitting diode (LED) display panel, an organic LED (OLED) display panel, a microelectromechanical systems (MEMS) display panel, or an electronic paper display panel.

According to various embodiments of the present disclosure, the display panel 530a may be integrally implemented with the touch sensor (or touch panel) 520a. In this case, the display panel 530a may be also referred to as a "touch screen panel (TSP)" or "touchscreen display panel".

According to an embodiment of the present disclosure, a pressure sensor 540a may detect pressure (or force) of a touch from the user. According to an embodiment, the pressure sensor 540a may include a first electrode 541 a, a second electrode 542a, or a dielectric layer 543a. For example, the pressure sensor 540a may sense the pressure of the touch based on capacitance between the first electrode 541 a or the second electrode 542a varying by the touch.

According to an embodiment of the present disclosure, the first electrode 541a and/or the second electrode 542a may be implemented to be transparent or opaque. For example, if implemented to be opaque, the first electrode 541a and/or the second electrode 542a may include copper (Cu), silver (Ag), magnesium (Mg), titanium (Ti), or opaque graphene. For example, if implemented to be transparent, the first electrode 541a and/or the second electrode 542a may include indium thin oxide (ITO), indium zinc oxide (IZO), Ag nanowire, metal mesh, transparent conducting polymer, or transparent graphene.

For example, one of the first electrode 541a and the second electrode 542a may be implemented with a metal plate for ground, and the other thereof may be formed to have a repeated polygon pattern by using the above-described member (e.g., a self-capacitance manner). For another example, one (e.g., a transmission terminal (Tx)) of the first electrode 541a and the second electrode 542a may be formed with a pattern extending in a first direction, and the other (e.g., a reception terminal (Rx)) thereof may be formed with a pattern extending in a second direction intersecting the first direction at a specified angle (e.g., a right angle) (a so-called mutual-capacitance manner).

According to various embodiments of the present disclosure, the dielectric layer 543a may include a dielectric material, for example, silicon foam, silicon membrane, optical clean adhesive (OCA), sponge, rubber, or polymer (e.g., polycarbonate (PC), polyethylene terephthalate (PET), or the like).

According to various embodiments of the present disclosure, when a touch input (including a touch, a hovering, and a "force touch") is received from a user, a haptic actuator 550a may provide the user with a haptic feedback (e.g., vibration). To this end, the haptic actuator 550a may include a piezoelectric member, a vibrator, or the like.

The stacked structure of the display above described with reference to FIG. 5A is an example and is able to be variously changed or modified. For example, the touch sensor 520a may be formed directly on a back surface of the cover glass 510a (a so-called cover glass integrated touch panel), may be inserted between the cover glass 510a and the display panel 530a after being separately manufactured (a so-called add-on touch panel), may be formed directly on the display panel 530a (a so-called on-cell touch panel), or may be included inside the display panel 530a (a so-called in-cell touch panel). Also, according to various embodiments of the present disclosure, the first electrode 541 a of the pressure sensor 540a may be attached to the display panel 530a after being formed in a circuit board (e.g., a FPCB) or may be formed directly on a back surface of the display panel 530a.

FIG. 5B is a view for describing a structure of a side-surface sensing area according to an embodiment of the present disclosure.

Referring to FIG. 5B, an electronic device 500b according to an embodiment is illustrated. For example, the electronic device 500b may correspond to the electronic device 401a illustrated in FIG. 4A. The electronic device 500b may include a display and a housing 510b in appearance. A description that is the same as the description of FIG. 4A, 4B, and/or FIG. 5A is omitted to describe FIG. 5B.

According to an embodiment of the present disclosure, at least one sensing area for sensing a touch from a user or detecting pressure of the touch may be positioned on a left-side surface 510lb and/or a right-side surface 510rb of the housing 510b.

According to an embodiment of the present disclosure, in the sensing area of the left-side surface 510lb and/or the right-side surface 510rb of the housing 510b, a bracket 511b, a tape 512b, a cushion 513b, a force sensor/touch sensor 514b, a sheet 515b, a tape 516b, and a bracket 517b may be sequentially arranged toward an inner side of the electronic device 500b from an outer side of the electronic device 500b.

For example, the brackets 511b and 517b may form inner/outer side surfaces of the housing 510b. The (adhesive) tapes 512b and 516b may fix the arrangement of the cushion 513b, the force sensor/touch sensor 514b, and the sheet 515b in a space between the bracket 511b and the bracket 517b. The cushion 513b may be positioned on an upper surface (a surface facing an outer-side direction) of the force sensor/touch sensor 514b to improve the sense of touch of a user. The force sensor/touch sensor 514b may sense a touch from a user or may detect pressure of the touch. For example, the force sensor/touch sensor 514b may include the touch sensor 520a and the pressure sensor 540a of FIG. 5A or may include only the pressure sensor 540a. The sheet 515b may be positioned on a lower surface of the force sensor/touch sensor 514b and may include copper (Cu) and/or graphite.

FIG. 5C is a view for describing a structure of a sensing area according to another embodiment of the present disclosure.

Referring to FIG. 5C, an electronic device 500c according to an embodiment of the present disclosure is illustrated. For example, the electronic device 500c may correspond to the electronic device 401b illustrated in FIG. 4B. The electronic device 500c may include a display 520c and a housing in appearance. A description that is the same as the description of FIGS. 4A, 4B, 5A, and/or FIG. 5B is omitted to describe FIG. 5C.

According to an embodiment of the present disclosure, the display 520c may be exposed to the outside through left/right-side surfaces of the electronic device 500c as well as a front surface of the electronic device 500c. The display 520c may visually display a variety of content. Also, the display 520c may sense a touch from a user or may detect pressure of the touch. The sensing area may be positioned on the front surface and/or the left/right-side surfaces of the display 520c.

According to an embodiment of the present disclosure, in the sensing area of the front surface and/or the left/right-side surfaces of the display 520c, a cover window 521c, a touch screen panel (TSP) 522c, a tape 523c, a cushion 524c, a force sensor 525c, a sheet 526c, a tape 527c, and a bracket 528c may be sequentially arranged toward an inner side of the electronic device 500c from an outer side of the electronic device 500c.

For example, the cover window 521c may be positioned on the outermost side of the display 520c. The cover window 521c may pass light generated by the touch screen panel 522c, and a touch of a user may be made on the cover window 521c. The touch screen panel (TSP) 522c may visually output or display a variety of content or may sense a touch from a user. For example, the touch screen panel 522c may include the touch sensor 520a and the display panel 530a of FIG. 5A. The (adhesive) tapes 523c and 527c may fix elements interposed between the touch screen panel (TSP) 522c and the bracket 528c. The cushion 524c may be positioned on an upper surface (a surface facing an outer-side direction) of the force sensor 525c to improve the sense of touch of a user. The force sensor 525c may detect pressure of a user touch made on the cover window 521c. For example, the force sensor 525c may include the pressure sensor 540a of FIG. 5A. The sheet 526c may be positioned on a lower surface of the force sensor 525c and may include copper (Cu) and/or graphite. The bracket 528c may physically support the various the various elements of the display 520c that are above described.

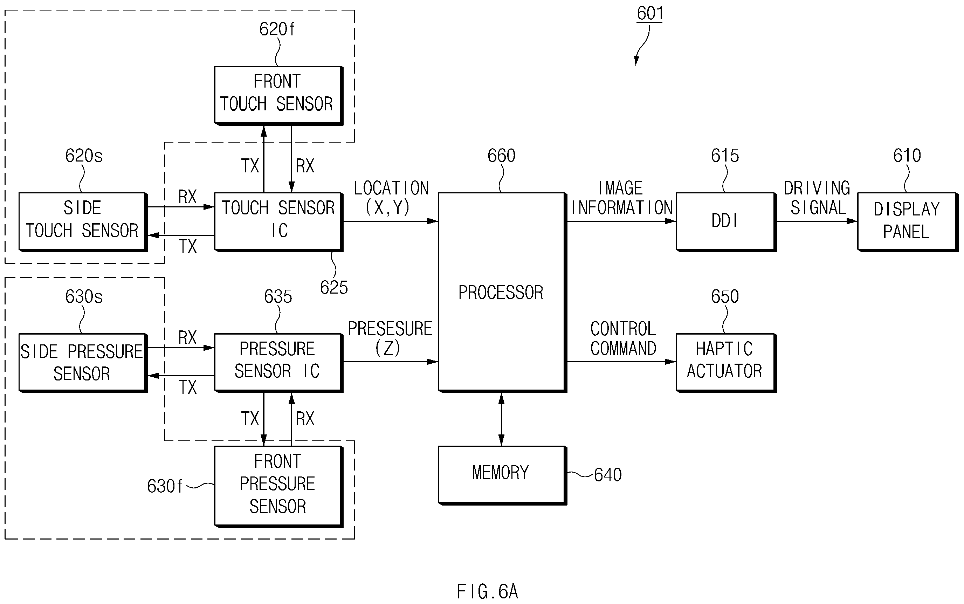

FIG. 6A illustrates a block diagram of an electronic device according to an embodiment of the present disclosure.

Referring to FIG. 6A, an electronic device according to an embodiment of the present disclosure may include a display panel 610, a display driving integrated circuit (DDI) 615, a front touch sensor 620f, a side touch sensor 620s, a touch sensor IC 625, a front pressure sensor 630f, a side pressure sensor 630s, a pressure sensor IC 635, a memory 640, a haptic actuator 650, and a processor 660. With regard to FIGS. 1 to 5, a duplicated description of corresponding configurations may be omitted.

According to various embodiments of the present disclosure, the display panel 610 may receive an image driving signal supplied with the display driving integrated circuit (DDI) 615. The display panel 610 may display a variety of content (e.g., a text, an image, a video, an icon, a symbol, and the like) based on the image driving signal. In this specification, the display panel 610 may be combined with the touch sensors 620f and 620s and/or the pressure sensors 630f and 630s (e.g., refer to FIGS. 5A to 5C). In this case, the combined structure may be referred to as a "touchscreen display".

According to various embodiments of the present disclosure, the display driving integrated circuit (DDI) 615 may supply the display panel 610 with an image driving signal corresponding to image information received from the processor (host) 660 at a specific frame rate. Although not illustrated in FIG. 6A according to various embodiments of the present disclosure, the DDI 615 may include a graphic random-access memory (RAM), an interface module, an image processing unit, a multiplexer, a display timing controller (T-con), a source driver, a gate driver, and/or an oscillator.

According to various embodiments of the present disclosure, in the front touch sensor 620f or the side touch sensor 620s, a specified physical quantity (e.g., a voltage, the intensity of radiation, resistance, the amount of charges, capacitance, or the like) may vary due to a touch from the user. According to an embodiment, the front touch sensor 620f or the side touch sensor 620s may be physically separated from each other or may be implemented with one touch sensor. Also, according to an embodiment, the front touch sensor 620f may be positioned to be overlaid with the display panel 610 (refer to FIGS. 4A and 4B). Also, according to an embodiment, the side touch sensor 620s may be positioned to be overlaid with a side portion of the display panel 610 (refer to FIG. 4B) or may be positioned on a back surface of a side housing (not illustrated) of the electronic device 601 (refer to FIG. 4A).

According to various embodiments of the present disclosure, the touch sensor IC 625 may sense a variation in a physical quantity in the touch sensors 620f and 620s and may calculate a location (X, Y), at which a touch is made, based on the variation in the physical quantity (e.g., a voltage, resistance, capacitance, or the like). The calculated location (coordinates) may be provided to the processor 660 as a user input event.

For example, if a portion (e.g., a finger) of a user body, a stylus (an example of an electronic pen), or the like makes contact with a glass (not illustrated) of a display, a coupling voltage between a transmission terminal Tx and a reception terminal Rx included in the touch sensors 620f and 620s may vary. The variation in the coupling voltage may be sensed by the touch sensor IC 625, and the touch sensor IC 625 may report coordinates of a location, at which the touch is made, to the processor 660. The processor 660 may acquire data of the location coordinates as an event associated with a user input.

According to various embodiments of the present disclosure, the touch sensor IC 625 may be referred to as a "touch IC", a "touch screen IC", a "touch controller", a "touch screen controller IC", or the like. Meanwhile, according to various embodiments of the present disclosure, in an electronic device in which the touch sensor IC 625 is not included, the processor 660 may perform a role of the touch sensor IC 625. Also, according to various embodiments of the present disclosure, the touch sensor IC 625 and the processor 660 may be implemented with one configuration (e.g., one-chip).

According to various embodiments of the present disclosure, pressure (or force) of a touch from the user may be detected in the front pressure sensor 630f and the side pressure sensor 630s. According to an embodiment of the present disclosure, the front pressure sensor 630f and the side pressure sensor 630s may be physically separated from each other or may be implemented with one pressure sensor. For example, in the pressure sensors 630f and 630s, a physical quantity (e.g., capacitance) between the transmission terminal Tx (e.g., the first electrode 541a of FIG. 5A) and the reception terminal Rx (e.g., the second electrode 542a of FIG. 5A) may vary due to the touch.

According to various embodiments of the present disclosure, the pressure sensor IC 635 may sense a variation in a physical quantity (e.g., capacitance or the like) in the pressure sensors 630f and 630s and may calculate pressure "Z" applied by a user touch based on the variation in the physical quantity. The pressure value may be provided to the processor 660 as a user input event, together with the location (X, Y) at which a touch is made.

According to various embodiments of the present disclosure, the pressure sensor IC 635 may be referred to as a "force touch controller", a "force sensor IC", a "pressure panel IC", or the like. Also, according to various embodiments of the present disclosure, the pressure sensor IC 635 may be implemented with one configuration (e.g., one-chip) together with the touch sensor IC 625.

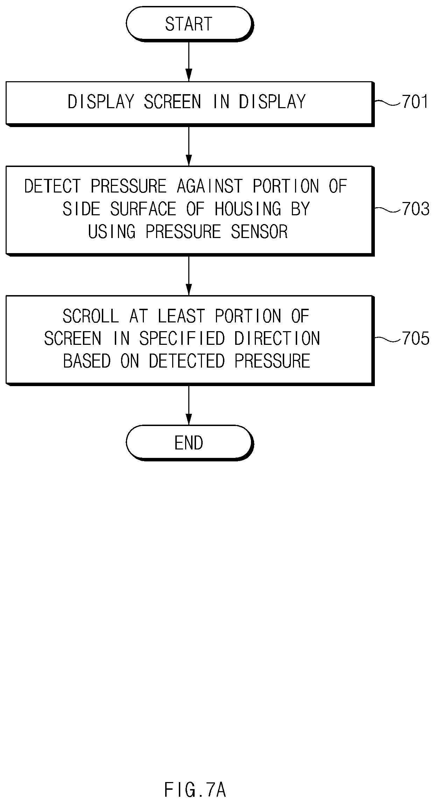

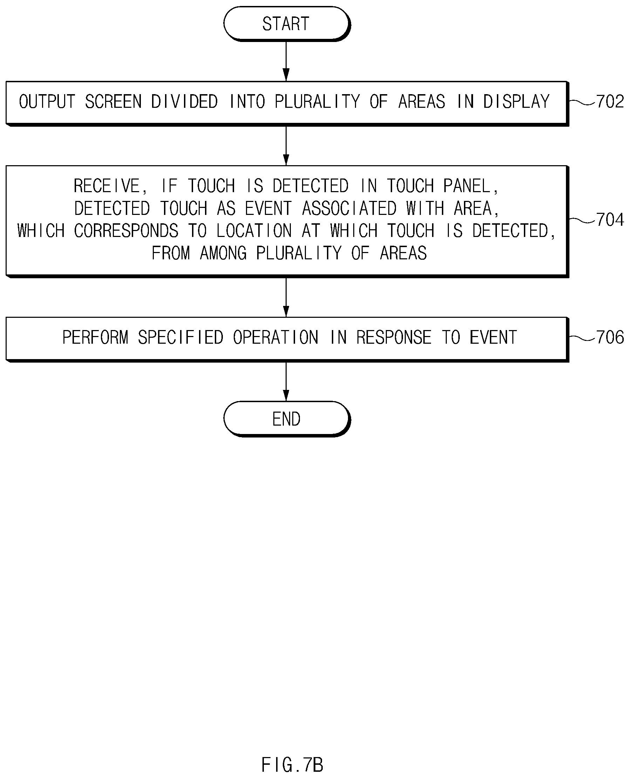

According to various embodiments of the present disclosure, the memory 640 may store commands or data associated with an operation of an element included in the electronic device 601. For example, the memory 640 may store instructions that, when executed, cause the processor 660 to perform various operations (e.g., refer to FIGS. 7A and 7B) disclosed in this specification.

According to various embodiments of the present disclosure, the haptic actuator 650 may provide a user with a haptic feedback (e.g., vibration) in response to a control command of the processor 660. For example, when a touch input (e.g., including a touch, a hovering, and a "force touch") is received from a user, the haptic actuator 650 may provide the user with a haptic feedback.

According to various embodiments of the present disclosure, the processor 660 may be electrically connected with elements 610 to 650 included in the electronic device 601 and may execute operations or data processing associated with control and/or communication of elements included in the electronic device 601.

According to an embodiment of the present disclosure, the processor 660 may output a screen, which is divided into a plurality areas (or sections), to the display panel 610 (or a touchscreen display). For example, the screen displayed in the display panel 610 may be a screen (e.g., a screen rendered according to activity set to an application) to be displayed according to execution of a specified application. The specified application may include various applications such as a home application, an image viewer application, an e-book reader application, a web browser application, a message (e.g., SMS/MMS, IM, or the like) application, a contacts application, and the like.

According to an embodiment of the present disclosure, if a touch is detected in the side touch sensor 620s and/or the side pressure sensor 630s, the processor 660 may receive the touch as a user input event associated with an area corresponding to a location at which the touch is detected. For example, the processor 660 may receive location coordinates (X, Y) and a pressure value "Z" from the touch sensor IC 625 and/or the pressure sensor IC 635, as a user input event. The touch may include, for example, a tap, a double tap, a touch-down of a specified time or more, a touch swiping in a specified direction, or a touch (a so-called "force touch") of a specified pressure value or more.

According to an embodiment of the present disclosure, the processor 660 may perform a specified operation in response to the event. The specified operation may include various operations. For example, the specified operation may include an operation of selecting an area corresponding to a location at which the touch is detected, an operation of selecting a graphic user interface (GUI) object included in the area corresponding to the location at which the touch is detected, an operation of scrolling at least one object included in the area corresponding to the location at which the touch is detected, or an operation of rearranging a plurality of objects, which are included in a partial area of the screen, in a specified order.

According to another embodiment of the present disclosure, the processor 660 may display a screen in the display panel 610 (or a touchscreen display) and may detect pressure against a portion of a side surface of the electronic device 601 by using the side pressure sensor 630s. Next, the processor 660 may scroll at least a portion of the screen in a specified direction based on the pressure detected by the side pressure sensor 630s.

The above-described operation of the processor 660 is, but is not limited to, an example. For example, an operation of a processor described in other parts of this specification should be understood as an operation of the processor 660. Also, in this specification, at least some of operations described as an operation of an electronic device should be understood as an operation of the processor 660.

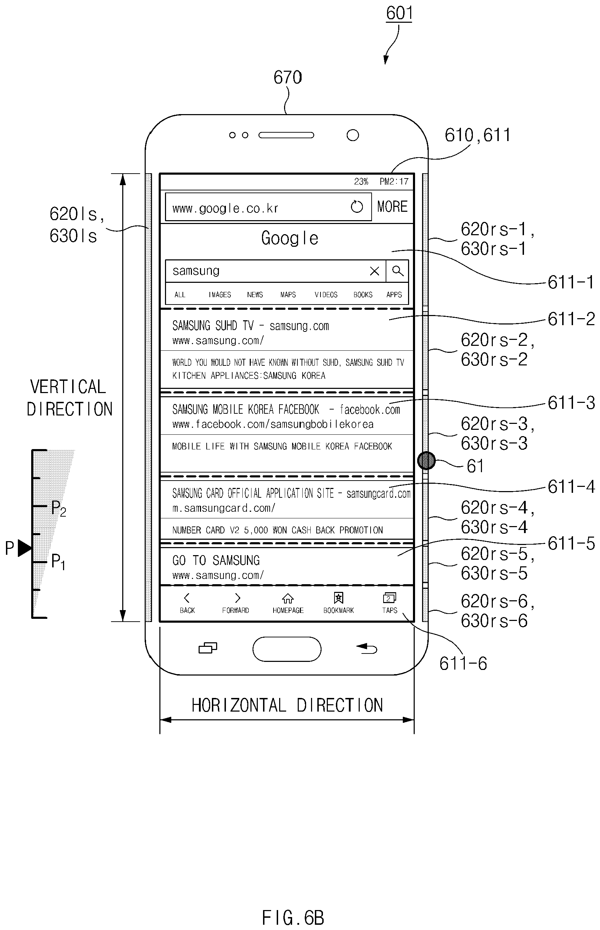

FIG. 6B is a view for describing an operation of an electronic device according to an embodiment of the present disclosure.

Referring to FIG. 6B, a web page screen 611 may be output by a web browser application in the display panel 610 of the electronic device 601 according to an embodiment.

For example, the web page screen 611 may be divided into a plurality of areas 611-1, 611-2, 611-3, 611-4, and 611-5. The plurality of areas 611-1, 611-2, 611-3, 611-4, and 611-5 may be arranged in a vertical direction of the display panel 610. Meanwhile, the division into the plurality of areas is for ease of description and may not be actually output in the display panel 610.

According to an embodiment of the present disclosure, the display panel 610 may include a first periphery (vertical side) 620ls, 630ls extending in the fifth direction or the sixth direction (vertical direction) and a second periphery (horizontal side) extending in the third direction or the fourth direction (horizontal direction) perpendicular to the fifth direction or the sixth direction (vertical side). As illustrated in FIG. 6B, the first periphery may be longer than the second periphery.

According to an embodiment of the present disclosure, a touch sensor and a pressure sensor may be positioned on a left/right-side surface of the housing 670 of the electronic device 601. At least a portion of a side surface of the housing 670 may extend along the first periphery (or first direction). For example, a touch sensor 620ls and a pressure sensor 630ls positioned on a left-side surface may form a single sensing area (620ls and 630ls). Also, a touch sensor 620rs and a pressure sensor 630rs positioned on a right-side surface may be divided into a plurality of sensing areas 620rs-1 to 620rs-6 (620rs-1, 620rs-2, 620rs-3, 620rs-4, 620rs-5 and 620rs-6) and 630rs-1 to 630rs-6 (630rs-1, 630rs-2, 630rs-3, 630rs-4, 630rs-5 and 630rs-6), respectively.

Division of a sensing area illustrated in FIG. 6B is, but is not limited to, an example. For example, in hardware, the touch sensor 620ls and the pressure sensor 630ls positioned on the left-side surface may sense a touch and pressure in the whole area of the sensing area 620ls and 630ls. However, the touch sensor 620ls and the pressure sensor 630ls may be logically or operatively divided into a plurality of sensing areas to sense a touch or pressure in each area. Likewise, the division may be applied to the touch sensor 620rs and the pressure sensor 630rs positioned on the right-side surface.

According to an embodiment of the present disclosure, the plurality of sensing areas (e.g., 620rs-1 to 620rs-6 and 630rs-1 to 630rs-6) of the touch sensor 620rs and the pressure sensor 630rs positioned on the right-side surface may be dynamically divided based on the screen 611 (content of the screen 611) output in the display panel 610. For example, the plurality of sensing areas (e.g., 620rs-1 to 620rs-6 and 630rs-1 to 630rs-6) may respectively correspond to a plurality of areas 611-1, 611-2, 611-3, 611-4, and 611-5 of the screen 611.

Accordingly, for example, the first sensing area 620rs-1 and 630rs-1 of the touch sensor 620rs and the pressure sensor 630rs may correspond to the first area 611-1 of the screen 611, and a second sensing area 620rs-2 and 630rs-2 may correspond to the second area 611-2 of the screen 611. The correspondence relationship may be similarly applied to the third area 611-3 to the sixth area 611-6 of the screen 6111.

According to an example, if a touch 61 is detected in the third sensing area 620rs-3 and 630rs-3, a processor of the electronic device 601 may receive (or acquire) the touch 61 as a user input event associated with the third area 611-3 of the screen 611 corresponding to the third sensing area 620rs-3 and 630rs-3. To this end, an area (e.g., the third area 611-3 of the screen 611) corresponding to a location (e.g., the third sensing area 620rs-3 and 630rs-3), at which the touch 61 is detected, may be aligned in parallel with the location (e.g., the third sensing area 620rs-3 and 630rs-3), at which the touch 61 is detected, in a horizontal direction of the display panel 610. According to an embodiment of the present disclosure, if receiving (acquiring) the user input event, the processor of the electronic device 601 may perform a specified operation (e.g., a selection operation, a scrolling operation, an operation of rearranging an object, or the like).

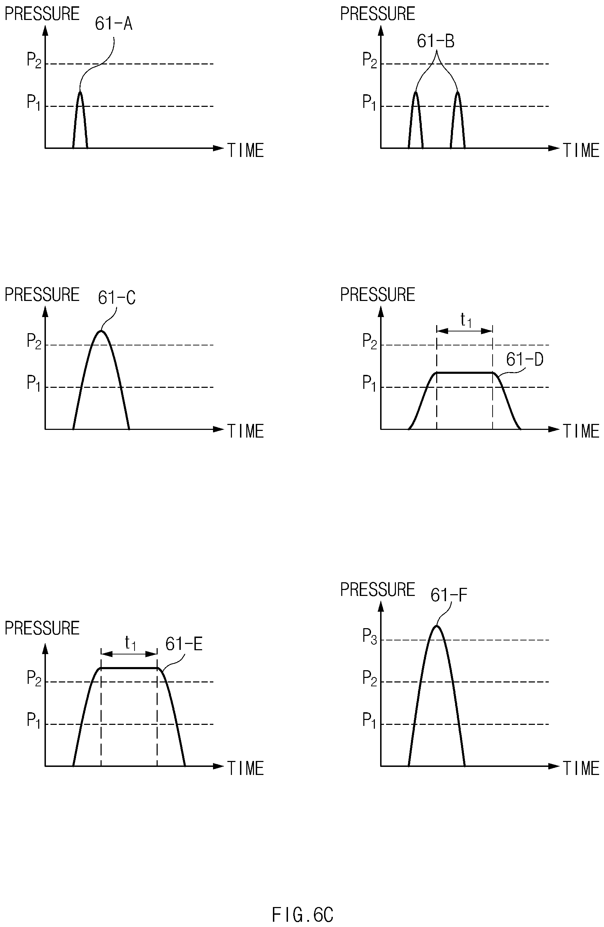

Meanwhile, based on pressure "P" of the touch 61 and/or the duration of the touch 61, the touch 61 may be classified as a tap, a double tap, a touch-down of a specified time or more, a force touch, or the like. For example, a touch that has pressure higher than pressure P1 and lower than pressure P2 may be recognized as a tap, and a touch that has pressure higher than the pressure P2 may be recognized as a force touch (refer to FIG. 6C in detail).

FIG. 6C is a view for describing a touch according to various embodiments of the present disclosure.

Referring to FIG. 6C, a "touch" (e.g., the touch 61 of FIG. 6B) according to various embodiments of the present disclosure may be specified based on pressure and/or duration of a touch. The "touch" according to various embodiments may include a tap, a double tap, a touch-down of a specified time or more, a force touch, and the like.

For example, referring to a curve 61-A, during a relatively short time, a touch that has pressure greater than pressure P1 and smaller than pressure P2 (P2 > PI) may be sensed (or detected). In this case, an electronic device may recognize (or specify) a touch corresponding to the curve 61-A as a simple "tap".

Also, for example, referring to a curve 61-B, during a relatively short time, a touch that has pressure greater than the pressure P1 and smaller than the pressure P2 may be sensed (or detected) twice. In this case, the electronic device may recognize a touch corresponding to the curve 61-B as a "double tap".

Also, for example, referring to a curve 61-C, during a given time, a touch that has pressure greater than the pressure P2 may be sensed once. In this case, the electronic device may recognize a touch corresponding to the curve 61-C as a "force touch".

Also, for example, referring to a curve 61-D, during a time longer than a specified time t₁, a touch that has pressure greater than the pressure P1 and smaller than the pressure P2 may be sensed. In this case, the electronic device may recognize a touch corresponding to the curve 61-D as a "touch-down".

Also, for example, referring to a curve 61-E, during a time longer than the specified time t₁, a touch that has pressure greater than the pressure P2 may be sensed. In this case, the electronic device may recognize a touch corresponding to the curve 61-E as a "force touch-down".

Also, for example, referring to a curve 61-F, during a given time, a touch that has pressure greater than pressure P3 (P3 > P2 > PI) may be sensed. In this case, the electronic device may recognize a touch corresponding to the curve 61-F as a "strong force touch".

The above-described types of the "touch" may not be limited to examples described in the curves 61-A to 61-F. For example, there may exist various touches, for example, a so-called "triple touch" including three touches, a very strong force touch exceeding pressure P4 higher than the pressure P3, and the like.

Also, if the "touches" of the various types above described are made, a processor of an electronic device may perform a specified operation. For example, the specified operation may include an operation of selecting an area corresponding to a location at which the "touch" is detected, an operation of selecting a GUI object included in the area corresponding to the location at which the "touch" is detected, an operation of scrolling at least one object included in the area corresponding to the location at which the "touch" is detected, or an operation of rearranging a plurality of objects output in a display in a specified order.

FIG. 7A illustrates a flowchart of a user interface (UI) method of an electronic device according to an embodiment of the present disclosure.

Referring to FIG. 7A, the UI method according to an embodiment of the present disclosure may include operations 701, 703 and 705. Operation 701 to operation 705 illustrated in FIG. 7A may be performed by, for example, the electronic device 601 illustrated in FIG. 6A. Operation 701 to operation 705 illustrated in FIG. 7A may respectively be implemented with, for example, instructions that are capable of being performed (or executed) by the processor 660 of the electronic device 601. The instructions may be stored in, for example, a computer-readable recording medium or the memory 640 of the electronic device 601 illustrated in FIG. 6A. Below, operation 701 to operation 705 may be described by using the reference numerals of FIG. 6A.

According to various embodiments of the present disclosure, in operation 701, the processor 660 may display a screen in the display panel 610. For example, the screen may correspond to a screen to be displayed according to execution of a specified application.

According to various embodiments of the present disclosure, in operation 703, the processor 660 may detect pressure against a portion of a side surface of a housing by using the side pressure sensor 630s. For example, the processor 660 may receive a value of the detected pressure through the pressure sensor IC 635.

According to various embodiments of the present disclosure, in operation 705, the processor 660 may scroll at least a portion of a screen output in the display panel 610 in a specified direction (e.g., a horizontal direction or vertical direction of the display panel 610) based on the pressure detected in operation 703.

According to an embodiment of the present disclosure, in operation 705, the processor 660 may determine the at least a portion of the screen to be scrolled, based at least on the pressure applied to at least a portion (the side pressure sensor 630s) of the side surface. For example, the processor 660 may scroll the at least a portion of the screen at acceleration that is proportional to the pressure applied to the at least a portion of the side surface.

FIG. 7B illustrates a flowchart of a UI method of an electronic device according to an embodiment of the present disclosure.

Referring to FIG. 7B, the UI method according to an embodiment may include operations 702, 704 and 706. Operation 702 to operation 706 illustrated in FIG. 7B may be performed by, for example, the electronic device 601 illustrated in FIG. 6A. Operation 702 to operation 706 illustrated in FIG. 7B may be respectively implemented with, for example, instructions that are capable of being performed (or executed) by the processor 660 of the electronic device 601. The instructions may be stored in, for example, a computer-readable recording medium or the memory 640 of the electronic device 601 illustrated in FIG. 6A. Below, operation 702 to operation 706 illustrated in FIG. 7B may be described by using the reference numerals of FIG. 6A.

According to various embodiments of the present disclosure, in operation 702, the processor 660 may output a screen, which is divided into a plurality of areas, in the display panel 610. For example, the screen may correspond to a screen to be displayed according to execution of a specified application.

According to various embodiments of the present disclosure, in operation 704, if a touch is detected in the side touch sensor 620s and/or the side pressure sensor 630s, the processor 660 may receive the touch as a user input event associated with an area, which corresponds to a location at which the touch is detected, from among the plurality of areas output in the display panel 610. For example, the processor 660 may receive location coordinates (X, Y) and a pressure value "Z" from the touch sensor IC 625 and/or the pressure sensor IC 635, as a user input event. The touch may include, for example, a tap, a double tap, a touch-down of a specified time or more, a touch swiping in a specified direction, or a touch (a so-called "force touch") of a specified pressure value or more.

According to various embodiments of the present disclosure, in operation 706, the processor 660 may perform a specified operation in response to the event. The specified operation may include various operations. For example, the specified operation may include an operation of selecting an area corresponding to a location at which the touch is detected, an operation of selecting a GUI object included in the area corresponding to the location at which the touch is detected, an operation of scrolling at least one object included in the area corresponding to the location at which the touch is detected, or an operation of rearranging a plurality of objects, which are included in a partial area of the screen, in a specified order.

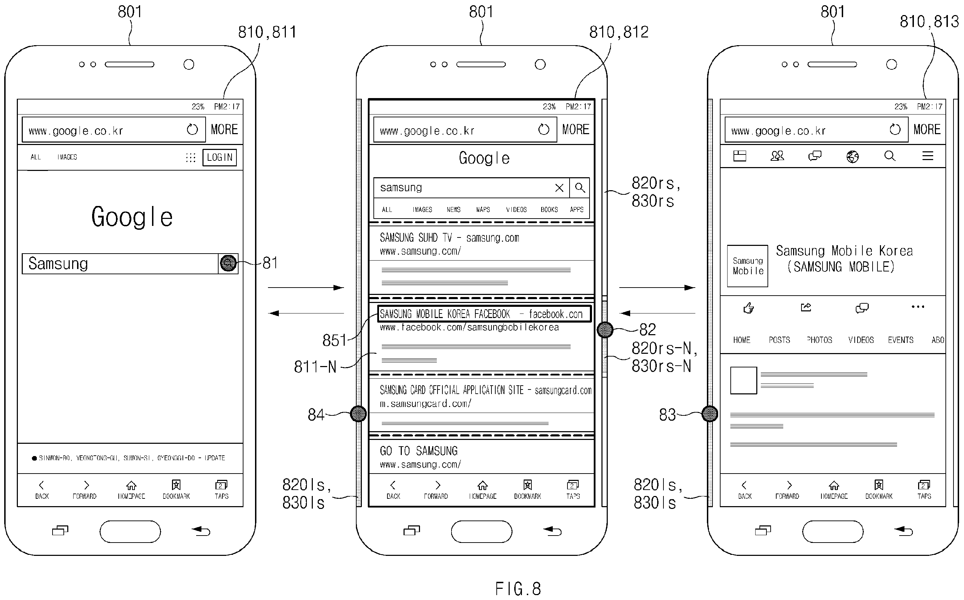

Below, an electronic device to which a UI method according to various embodiments is applied will be described with reference to FIGS. 8 to 11. FIGS. 8 to 11 will be described under assumption that a touch sensor and/or a pressure sensor is positioned on a side surface of an electronic device (refer to FIG. 4A). However, embodiments of the present disclosure may not be limited thereto. For example, the touch sensor and/or the pressure sensor may be positioned to be overlaid with a display positioned on a side surface of an electronic device (refer to FIG. 4B).

FIG. 8 is a view for describing a UI method of a web browser application according to an embodiment of the present disclosure.

Referring to FIG. 8, a web page screen 811 may be output by a web browser application in a display 810 of an electronic device 801 according to an embodiment. For example, a web page of a search engine provider may be displayed in the web page screen 811.

For example, a user may input a keyword "samsung" in a search box of the web page screen 811 and may tap a search button icon 81. If the search button icon 81 is tapped, the electronic device 801 may output a web page screen 812 in the display 810.

A search result screen corresponding to "samsung" may be displayed in the web page screen 812. According to an embodiment of the present disclosure, the web page screen 812 may be divided into a plurality of areas. The plurality of areas may be arranged in a vertical direction of the display 810. In this case, the division (dotted lines) into the plurality of areas is for ease of description and may not be actually output in the display 810.

According to an embodiment of the present disclosure, a left-side surface touch sensor 820ls and a left-side surface pressure sensor 830ls may be positioned on a left-side surface of the electronic device 801. For example, the touch sensor 820ls and the pressure sensor 830ls may form a single sensing area (820ls and 830ls). Also, a right-side surface touch sensor 820rs and a right-side surface pressure sensor 830rs positioned on a right-side surface of the electronic device 801 may be divided into a plurality of sensing areas.

According to an embodiment of the present disclosure, the division into the plurality of sensing areas positioned on the right-side surface of the electronic device 801 may be dynamically made based on the web page screen 812 (content thereof). For example, the plurality of sensing areas may correspond to a plurality of areas of the web page screen 812, respectively. For example, an N-th sensing area 820rs-N and 830rs-N may correspond to an N-th area 812-N of the web page screen 812. For example, the N-th area 812-N may be positioned in parallel with the N-th sensing area 820rs-N and 830rs-N in a horizontal direction of the display 810.

For example, a user may perform a force touch 82 in the N-th sensing area 820rs-N and 830rs-N by using a finger (e.g., a thumb of his/her right hand). If the force touch 82 is detected in the N-th sensing area 820rs-N and 830rs-N, a processor of the electronic device 801 may receive the force touch 82 as a user input event associated with the N-th area 812-N corresponding to the N-th sensing area 820rs-N and 830rs-N.

According to an embodiment of the present disclosure, the processor of the electronic device 801 may perform a specified operation if the user input event is received. For example, the specified operation may include an operation of selecting an area (the N-th area 812-N) corresponding to a location at which the force touch 82 is detected. In detail, the specified operation may include an operation of selecting a GUI object 851 included in the area (the N-th area 812-N) corresponding to the location at which the force touch 82 is detected. If the specified operation is performed, the processor of the electronic device 801 may output a web page screen 813, which is linked to the GUI object 851 included in the N-th area 812-N (the GUI object 851 included in the N-th area 812-N), in the display 810.

Afterwards, the user may perform a double tap 83 in the left-side sensing area 820ls and 830ls by using his/her finger (e.g., an index finger of his/her left hand). If the double tap 83 is detected in the left-side sensing area 820ls and 830ls, the processor of the electronic device 801 may receive the double tap as a user input event associated with the whole area of the web page screen 813. The processor of the electronic device 801 may perform a specified operation if the user input event is received. For example, the processor may output the web page screen 812 output before the web page screen 813.

Next, the user may again perform a double tap 84 in the left-side sensing area 820ls and 830ls by using his/her finger (e.g., an index finger of his/her left hand). In this case, the processor of the electronic device 801 may output a web page screen 811 output before the web page screen 812, based on the double tap 84.

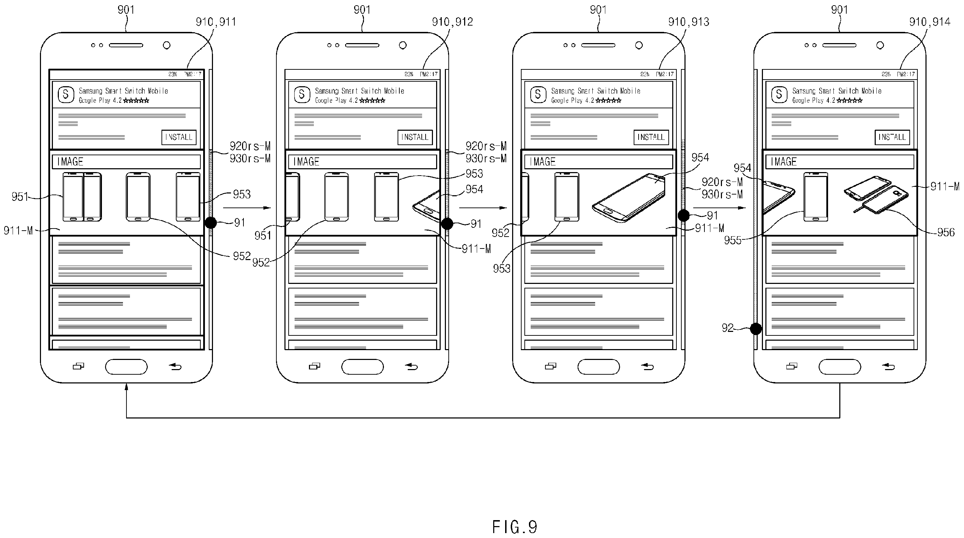

FIG. 9 is a view for describing a UI method of a web browser application according to another embodiment of the present disclosure.

Referring to FIG. 9, a web page screen 911 may be output by a web browser application in a display 910 of an electronic device 901 according to an embodiment. For example, a web page including an area (e.g., 911-M) in which scrolling of a horizontal direction is allowed may be displayed in the web page screen 911.

For example, the web page screen 911 may be divided into a plurality of areas. The plurality of areas may be arranged in a vertical direction of the display 910. In this case, the division into the plurality of areas is for ease of description and may not be actually output in the display 910.

According to an embodiment of the present disclosure, a right-side surface touch sensor 920rs and a right-side surface pressure sensor 930rs positioned on a right-side surface of the electronic device 901 may be divided into a plurality of sensing areas. For example, the division into the plurality of sensing areas may be dynamically made based on the web page screen 911 (content thereof). For example, the plurality of sensing areas may correspond to a plurality of areas of the web page screen 911, respectively. For example, an M-th sensing area 920rs-M and 930rs-M may correspond to an M-th area 911-M of the web page screen 911. For example, the M-th area 911-M may be positioned in parallel with the M-th sensing area 920rs-M and 930rs-M in a horizontal direction of the display 910.

For example, a user may perform a force touch 91 in the M-th sensing area 920rs-M and 930rs-M by using his/her finger (e.g., a thumb of his/her right hand). If the force touch 91 is detected in the M-th sensing area 920rs-M and 930rs-M, a processor of the electronic device 901 may receive the force touch 91 as a user input event associated with the M-th area 911-M corresponding to the M-th sensing area 920rs-M and 930rs-M.

According to an embodiment of the present disclosure, the processor of the electronic device 901 may perform a specified operation if the user input event is received. For example, the specified operation may include an operation of scrolling GUI objects 951, 952, and 953 included in the M-th area 911-M corresponding to a location at which the force touch 91 is detected, in a specified direction.

For example, the scrolling operation may be continuously performed while the force touch 91 is made. For example, if the force touch 91 is made, as illustrated in a web page screen 912, the GUI objects 951, 952, and 953 may be scrolled from the right to the left, and a new GUI object 954 may be output in the display 910. Also, if the force touch 91 is continuously made, as illustrated in a web page screen 913, the GUI object 951 may be faded away after being scrolled from the right to the left. Next, if the force touch 91 is continuously made, as illustrated in a web page screen 914, the GUI objects 952 and 953 may be faded away after being scrolled from the right to the left, and new GUI objects 955 and 956 may be output in the display 910.

According to an embodiment of the present disclosure, the processor of the electronic device 901 may scroll the GUI objects 951 to 956 included in the M-th area 911-M at acceleration that is proportional to pressure of the force touch 91. That is, the processor of the electronic device 901 may determine at least a portion of a screen to be scrolled based at least on pressure applied to at least a portion of a side surface.

According to an embodiment of the present disclosure, afterwards, the user may perform a double tap 92 in a left-side sensing area 920ls and 930ls by using his/her finger (e.g., an index finger of his/her right hand). If the double tap 92 is detected, the processor of the electronic device 901 may receive the double tap 92 as a user input event associated with the whole area of the web page screen 914. The processor of the electronic device 901 may return to the first output web page screen 911 if the user input event is received. According to various embodiments, in the web page screen 914, the processor may return to the web page screen 911 if the force touch 91 disappears and a specified time elapses.

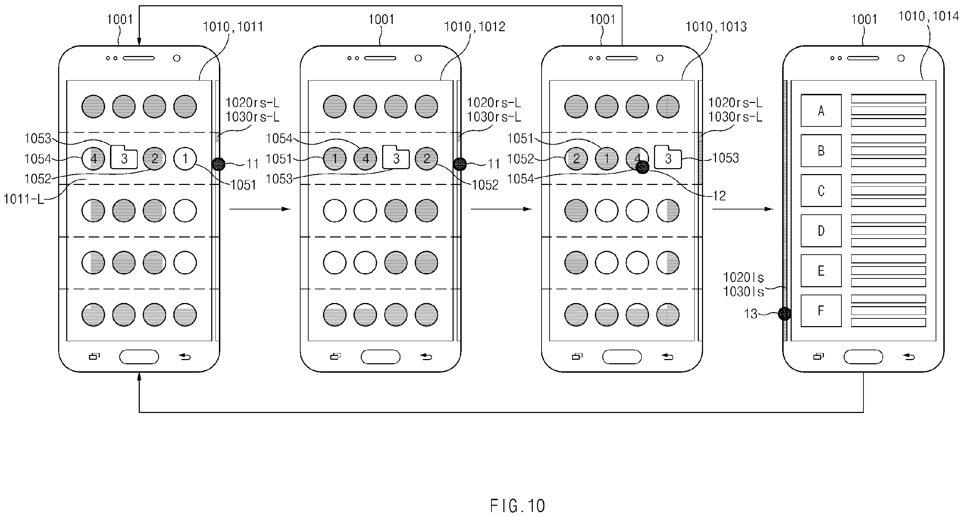

FIG. 10 is a view for describing a UI method of a home application according to an embodiment of the present disclosure.

Referring to FIG. 10, a home screen 1011 may be output by a home application in a display 1010 of an electronic device 1001 according to an embodiment. For example, at least one GUI object such as an application icon, a folder icon, a widget, or the like may be displayed in the home screen 1011. For example, at least one GUI object may be included in each row and each column.

For example, the home screen 1011 may be divided into a plurality of areas. The plurality of areas may be arranged in a vertical direction of the display 1010. The plurality of areas according to an embodiment may mean each row space of the home screen 1011. Each row space may include at least one GUI object at each column. In this case, the division into the plurality of areas (e.g., row spaces) is for ease of description and may not be actually output in the display 1010.

According to an embodiment of the present disclosure, a right-side surface touch sensor 1020rs and a right-side surface pressure sensor 1030rs positioned on a right-side surface of the electronic device 1001 may be divided into a plurality of sensing areas. For example, the division into the plurality of sensing areas may be dynamically made based on the home screen 1011 (a layout thereof). For example, the plurality of sensing areas may correspond to the plurality of areas of the home screen 1011, respectively. For example, an L-th sensing area 1020rs-L and 1030rs-L may correspond to an L-th area 1011-L of the home screen 1011. For example, the L-th area 1011-L may be positioned in parallel with the L-th sensing area 1020rs-L and 1030rs-L in a horizontal direction of the display 1010.

For example, a user may perform a force touch 11 in the L-th sensing area 1020rs-L and 1030rs-L by using his/her finger (e.g., a thumb of his/her right hand). If the force touch 11 is detected in the L-th sensing area 1020rs-L and 1030rs-L, a processor of the electronic device 1001 may receive the force touch 11 as a user input event associated with the L-th area 1011-L corresponding to the L-th sensing area 1020rs-L and 1030rs-L.

According to an embodiment of the present disclosure, the processor of the electronic device 1001 may perform a specified operation if the user input event is received. For example, the specified operation may include an operation of rearranging icons 1051, 1052, 1053, and 1054 included in the L-th area 1011-L corresponding to a location at which the force touch 11 is detected, in a specified order.

For example, the rearranging operation may be continuously performed while the force touch 11 is made. For example, if the force touch 11 is performed, as illustrated in a home screen 1012, the icons 1054, 1053, and 1052 may be rearranged such that columns of the icons 1054, 1053, and 1052 are changed from the left to the right. In this case, the icon 1051 may be moved to the leftmost column (first column). Also, if the force touch 11 is continuously made, as illustrated in a home screen 1013, the icons 1051, 1054, and 1053 may be rearranged such that columns of the icons 1051, 1054, and 1053 are changed from the left to the right. In this case, the icon 1052 may be moved to the leftmost column (first column).

According to various embodiments of the present disclosure, the rearranging order is not limited to the above-described example. For example, icons may be rearranged in response to the force touch 11 such that columns thereof are changed from the right to the left. For example, each of the icons 1053, 1052, and 1051 may move to a left column, and the icon 1054 may move to the rightmost column (fourth column).

Also, according to various embodiments of the present disclosure, in the home screen 1013, the processor of the electronic device 1001 may return to the home screen 1011 if the force touch 11 disappears and a specified time elapses.

Meanwhile, the user may perform a touch (e.g., tap) 12 on the icon 1054 in the home screen 1013. If the touch 12 is made, an execution screen 1014 of an application associated with the icon 1054 may be output in the display 1010.

Afterwards, for example, the user may perform a double tap 13 in a left-side sensing area 1020ls and 1030ls by using his/her finger (e.g., an index finger of his/her right hand). If the double tap 13 is detected, the processor of the electronic device 1001 may receive the double tap 13 as a user input event associated with the whole area of the application execution screen 1014. The processor of the electronic device 1001 may return to the first output home screen 1011 if the user input event is received.

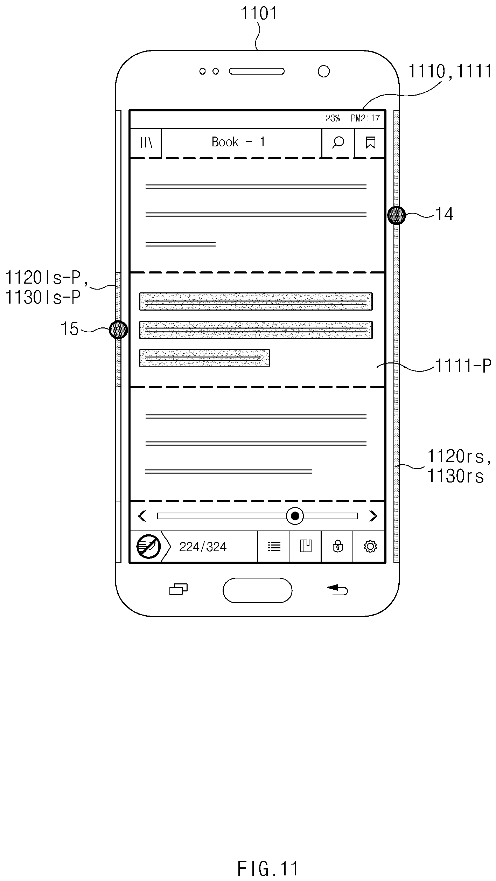

FIG. 11 is a view for describing a UI method of an e-book application according to an embodiment of the present disclosure.

Referring to FIG. 11, a screen 1111 corresponding to any one page of "Book-1" may be output by an e-book application in a display 1110 of an electronic device 1101 according to an embodiment.

For example, 224-page content of "Book-1" may be displayed on the screen 1111. According to an embodiment of the present disclosure, the screen 1111 may be divided into a plurality of areas. For example, the division into the plurality of areas may be made based on a paragraph included in a 224 page of "Book-1". The plurality of areas may be arranged in a vertical direction of the display 1110. In this case, the division (dotted lines) into the plurality of areas is for ease of description and may not be actually output in the display 1110.

According to an embodiment of the present disclosure, a right-side surface touch sensor 1120rs and a right-side pressure sensor 1130rs may be positioned on a right-side surface of the electronic device 1101. For example, the right-side surface touch sensor 1120rs and the right-side surface pressure sensor 1130rs may form a single sensing area (1120rs and 1130rs). Also, a left-side surface touch sensor 1120ls and a left-side surface pressure sensor 1130ls positioned on a left-side surface of the electronic device 1101 may be divided into a plurality of sensing areas.

According to an embodiment of the present disclosure, the division into the plurality of sensing areas positioned on the left-side surface of the electronic device 1101 may be dynamically made based on the screen 1111 (e.g., based on paragraph division). For example, the plurality of sensing areas may correspond to the plurality of areas of the screen 1111, respectively. For example, a P-th sensing area 1120ls-P and 1130ls-P may correspond to a P-th area 1111-P of the screen 1111. For example, the P-th area 1111-P may be positioned in parallel with the P-th sensing area 1120ls-P and 1130ls-P in a horizontal direction of the display 1110.

For example, a user may perform a force touch 15 in the P-th sensing area 1120ls-P and 1130ls-P by using his/her finger (e.g., an index finger of his/her right hand). If the force touch 15 is detected in the P-th sensing area 1120ls-P and 1130ls-P, a processor of the electronic device 1101 may receive the force touch 15 as a user input event associated with the P-th area 1111-P corresponding to the P-th sensing area 1120ls-P and 1130ls-P.

According to an embodiment of the present disclosure, the processor of the electronic device 1101 may perform a specified operation if the user input event is received. For example, the specified operation may include an operation of highlighting an area (the P-th area 1111-P) corresponding to a location at which the force touch 15 is detected. In detail, the processor may highlight a text included in the area (the P-th area 1111-P) corresponding to the location at which the force touch 15 is detected.

Meanwhile, the user may perform a tap 14 in a right-side sensing area 1120rs and 1130rs by using his/her finger (e.g., a thumb of his/her right hand). If the tap 14 is detected in the right-side sensing area 1120rs and 1130rs, the processor of the electronic device 1101 may receive the tap as a user input event associated with the whole area of the screen 1111. The processor of the electronic device 1101 may perform a specified operation if the user input event is received. For example, the processor may output 225-page content of "Book-1", which is a next page of the 224 page, in the display 1110.

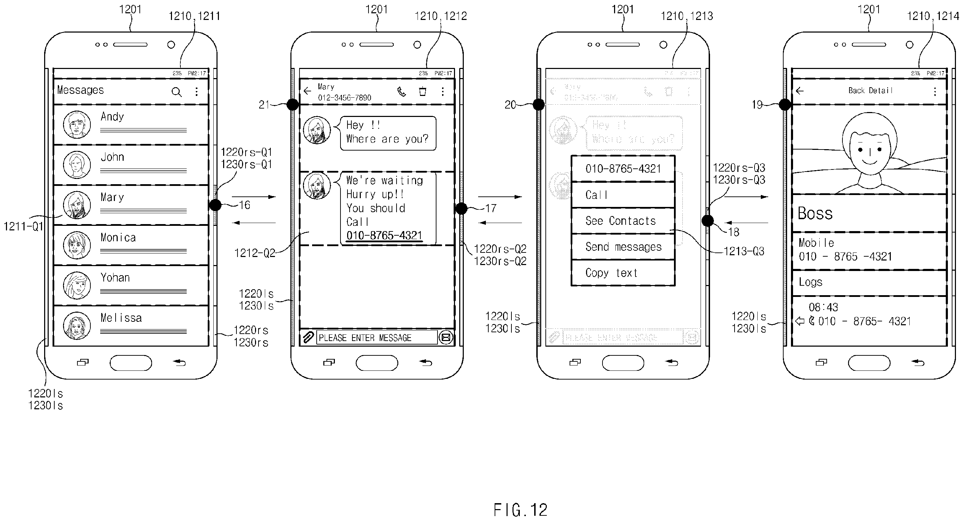

FIG. 12 is a view for describing a UI method of a message application according to an embodiment of the present disclosure.

Referring to FIG. 12, a screen 1211 including a message list may be output by a message (e.g., SMS/MMS) application in a display 1210 of an electronic device 1201 according to an embodiment. For example, according to the screen 1211 including the message list, messages may be classified on the basis of senders.

According to an embodiment of the present disclosure, the screen 1211 may be divided into a plurality of areas. The plurality of areas may be arranged in a vertical direction of the display 1210. In this case, the division (dotted lines) into the plurality of areas is for ease of description and may not be actually output in the display 1210.

According to an embodiment of the present disclosure, a left-side surface touch sensor 1220ls and a left-side surface pressure sensor 1230ls may be positioned on a left-side surface of the electronic device 1201. For example, the left-side surface touch sensor 1220ls and the left-side surface pressure sensor 1230ls may form a single sensing area (1220ls and 1230ls). Also, a right-side surface touch sensor 1220rs and a right-side surface pressure sensor 1230rs positioned on a right-side surface of the electronic device 1201 may be divided into a plurality of sensing areas.

According to an embodiment of the present disclosure, the division into the plurality of sensing areas (e.g., sensing areas in which the right-side surface touch sensor 1220rs and the right-side surface pressure sensor 1230rs are formed) positioned on the right-side surface of the electronic device 1201 may be dynamically made based on the screen 1211 (e.g., based on a boundary for distinguishing between objects). For example, the plurality of sensing areas positioned on the right-side surface of the electronic device 1201 may correspond to the plurality of areas of the screen 1211, respectively. For example, a Q1-th sensing area 1220rs-Q1 and 1230rs-Q1 may correspond to a Q1-th area 1211-Q1 of the screen 1211. For example, the Q1-th area 1211-Q1 may be positioned in parallel with the Q1-th sensing area 1220rs-Q1 and 1230rs-Q1 in a horizontal direction of the display 1210.

For example, a user may perform a force touch 16 in the Q1-th sensing area 1220rs-Q1 and 1230rs-Q1 by using his/her finger (e.g., a thumb of his/her right hand). If the force touch 16 is detected in the Q1-th sensing area 1220rs-Q1 and 1230rs-Q1, a processor of the electronic device 1201 may receive the force touch 16 as a user input event associated with the Q1-th area 1211-Q1 corresponding to the Q1-th sensing area 1220rs-Q1 and 1230rs-Q1.

According to an embodiment of the present disclosure, the processor of the electronic device 1201 may perform a specified operation if the user input event is received. For example, the specified operation may include an operation of selecting an area (the Q1-th area 1211-Q1) corresponding to a location at which the force touch 16 is detected. In detail, the processor may select an object (e.g., an object indicating a message exchanged with "Mary") included in an area (the Q1-th area 1211-Q1) corresponding to the location at which the force touch 16 is detected. If the object is selected, the electronic device 1201 may display a screen 1212 in the display 1210.

According to an embodiment of the present disclosure, the screen 1212 in which messages exchanged with "Mary" are included may be displayed in the display 1210. For example, the division into the plurality of sensing areas (e.g., sensing areas in which the right-side surface touch sensor 1220rs and the right-side surface pressure sensor 1230rs are formed) positioned on the right-side surface of the electronic device 1201 may be dynamically made based on the screen 1212 (e.g., based on a boundary for distinguishing between objects). For example, the plurality of sensing areas positioned on the right-side surface of the electronic device 1201 may correspond to the plurality of areas of the screen 1212, respectively. For example, a Q2-th sensing area 1220rs-Q2 and 1230rs-Q2 may correspond to a Q2-th area 1212-Q2 of the screen 1212. For example, the Q2-th area 1212-Q2 may be positioned in parallel with the Q2-th sensing area 1220rs-Q2 and 1230rs-Q2 in a horizontal direction of the display 1210.

For example, a user may perform a force touch 17 in the Q2-th sensing area 1220rs-Q2 and 1230rs-Q2 by using his/her finger (e.g., a thumb of his/her right hand). If the force touch 17 is detected in the Q2-th sensing area 1220rs-Q2 and 1230rs-Q2, the processor of the electronic device 1201 may receive the force touch 17 as a user input event associated with the Q2-th area 1212-Q2 corresponding to the Q2-th sensing area 1220rs-Q2 and 1230rs-Q2.

According to an embodiment of the present disclosure, the processor of the electronic device 1201 may perform a specified operation if the user input event is received. For example, the specified operation may include an operation of selecting an area (the Q2-th area 1212-Q2) corresponding to a location at which the force touch 17 is detected. In detail, the processor may select an object (e.g., a hyperlinked object "010-8765-4321" of a second message received from "Mary") included in an area (the Q2-th area 1212-Q2) corresponding to the location at which the force touch 17 is detected. If the object is selected, the electronic device 1201 may display a screen 1213 in the display 1210.

According to an embodiment of the present disclosure, the screen 1213 associated with the hyperlinked object "010-8765-4321" may be displayed in the display 1210. For example, the division into the plurality of sensing areas (e.g., sensing areas in which the right-side surface touch sensor 1220rs and the right-side surface pressure sensor 1230rs are formed) positioned on the right-side surface of the electronic device 1201 may be dynamically made based on the screen 1213 (e.g., based on a boundary for distinguishing between objects). For example, the plurality of sensing areas positioned on the right-side surface of the electronic device 1201 may correspond to the plurality of areas of the screen 1213, respectively. For example, a Q3-th sensing area 1220rs-Q3 and 1230rs-Q3 may correspond to a Q3-th area 1213-Q3 of the screen 1213. For example, the Q3-th area 1213-Q3 may be positioned in parallel with the Q3-th sensing area 1220rs-Q3 and 1230rs-Q3 in a horizontal direction of the display 1210.

For example, a user may perform a force touch 18 in the Q3-th sensing area 1220rs-Q3 and 1230rs-Q2 by using his/her finger (e.g., a thumb of his/her right hand). If the force touch 18 is detected in the Q3-th sensing area 1220rs-Q3 and 1230rs-Q3, the processor of the electronic device 1201 may receive the force touch 18 as a user input event associated with the Q3-th area 1213-Q3 corresponding to the Q3-th sensing area 1220rs-Q3 and 1230rs-Q3.

According to an embodiment of the present disclosure, the processor of the electronic device 1201 may perform a specified operation if the user input event is received. For example, the specified operation may include an operation of selecting an area (the Q3-th area 1213-Q3) corresponding to a location at which the force touch 18 is detected. In detail, the processor may select an object (e.g., a function button corresponding to "See Contacts") included in an area (the Q3-th area 1213-Q3) corresponding to the location at which the force touch 18 is detected. If the object is selected, the electronic device 1201 may display a screen 1214 in the display 1210.

According to an embodiment of the present disclosure, the screen 1214 associated with the function button corresponding to "See Contacts" may be displayed in the display 1210. For example, the division into the plurality of sensing areas (e.g., sensing areas in which the right-side surface touch sensor 1220rs and the right-side surface pressure sensor 1230rs are formed) positioned on the right-side surface of the electronic device 1201 may be dynamically made based on the screen 1214 (e.g., based on a boundary for distinguishing between objects). Also, as described above, a single sensing area (1220ls and 1230ls) may be formed by the left-side surface touch sensor 1220ls and the left-side surface pressure sensor 1230ls on a left-side surface of the electronic device 1201.

For example, the user may perform a double tap 19 in a left-side sensing area 1220ls and 1230ls by using his/her finger (e.g., an index finger of his/her right hand). If the double tap 19 is detected in the left-side sensing area 1220ls and 1230ls, the processor of the electronic device 1201 may receive the force touch 18 as a user input event associated with the whole screen 1214 corresponding to the left-side sensing area 1220ls and 1230ls.

According to an embodiment of the present disclosure, the processor of the electronic device 1201 may perform a specified operation if the user input event is received. For example, the specified operation may include an operation of returning to the previous screen 1213 from the screen 1214 that is currently displayed. For example, the double tap 19 may be similar to push a back button.

According to various embodiments of the present disclosure, a double tap in the left-side sensing area 1220ls and 1230ls may be in common applied to the screens 1211, 1212, 1213, and 1214 illustrated in FIG. 12. For example, the screen 1212 may be output if a double tap 20 is performed while the screen 1213 is displayed; the screen 1211 may be output if a double tap 21 is performed while the screen 1212 is displayed.

According to various embodiments of the present disclosure, various UIs and user experiences (UXs) may be provided based on a touch (e.g., a tap, a double tap, a touch-down of a specified time or more, a touch swiping in a specified direction, or a force touch) on opposite side surfaces of an electronic device. Since a user is provided with an intended function by touching a side surface, the user may manipulate the electronic device with only one hand gripping the electronic device.

As described above, an electronic device according to an embodiment may include a housing that includes a first surface facing in a first direction, a second surface facing in a second direction opposite from the first direction, and a side surface surrounding at least a portion of space between the first surface and the second surface, a touchscreen display that is interposed between the first and second surfaces and is exposed through the first surface, a pressure sensor that is interposed between the first and second surfaces and is positioned to detect pressure of an external object against at least a portion of the side surface, a processor that is positioned inside the housing and is electrically coupled to the display and the pressure sensor, and a memory that is positioned inside the housing and is electrically coupled to the processor. The memory may store instructions that, when executed, cause the processor to display a screen on the display, detect pressure against a portion of the side surface using the pressure sensor, and upon the detection of the pressure, scroll at least a portion of the screen in a specified direction.

In another embodiment of the present disclosure, the first surface may include a first periphery extending in a fifth direction or a sixth direction and a second periphery extending in a third direction or a fourth direction perpendicular to the fifth direction or the sixth direction, and the at least a portion of the side surface may include a portion of the side surface that extends along the first periphery.

In another embodiment of the present disclosure, the first periphery may be longer than the second periphery.

In another embodiment of the present disclosure, the specified direction may be the third direction or the fourth direction.

In another embodiment of the present disclosure, the instructions may cause the processor to determine the at least a portion of the screen to be scrolled, based at least partly on the at least a portion of the side surface against which the pressure is imposed.

In another embodiment of the present disclosure, the screen displayed on the display may be a screen to be displayed by execution of a specified application, and the specified application may at least include a home application, an e-book reader application, a web browser application, a message application, or a contacts application.

An electronic device according to an embodiment may include a display that is positioned on a front surface of the electronic device, a touch sensor that is positioned on one side surface of the electronic device, and a processor that is electrically connected with the display and the touch sensor. The processor may be configured to output a screen divided into a plurality of areas to the display, if a touch is detected by the touch sensor, receive the touch as an event of an area, which corresponds to a location at which the touch is detected, from among the plurality of areas, and perform a specified operation in response to the event.

In another embodiment of the present disclosure, the touch sensor may have a length corresponding to a vertical length of the display.

In another embodiment of the present disclosure, the area corresponding to the location at which the touch is detected may be aligned in parallel with the location, at which the touch is detected, in a horizontal direction of the display.

In another embodiment of the present disclosure, the plurality of areas may be arranged in a vertical direction of the display.

In another embodiment of the present disclosure, the touch may include a tap, a double tap, a touch-down of a specified time or more, or a touch swiping in a specified direction.

In another embodiment of the present disclosure, the electronic device may further include a pressure sensor positioned to be overlaid with the touch sensor. The pressure sensor may be positioned to detect pressure of the touch, and the touch may include a touch of specified pressure or higher.

In another embodiment of the present disclosure, the specified operation may include an operation of selecting the area corresponding to the location at which the touch is detected.

In another embodiment of the present disclosure, the specified operation may include an operation of selecting a graphic user interface (GUI) object included in the area corresponding to the location at which the touch is detected.

In another embodiment of the present disclosure, the specified operation may include an operation of scrolling at least one object included in the area corresponding to the location at which the touch is detected.

In another embodiment of the present disclosure, the specified operation may include an operation of rearranging a plurality of objects included in a partial area of the screen in a specified order.

In another embodiment of the present disclosure, the electronic device may further include a housing forming at least a portion of appearance of the electronic device, and one side surface of the electronic device, on which the touch sensor is positioned, may be one side surface of the housing.

In another embodiment of the present disclosure, the display may further extend to the one side surface from the front surface, and the touch sensor may be positioned to be overlaid with a display extended to the one side surface.

According to an embodiment of the present disclosure, a user interface method of an electronic device on a side surface of which a touch sensor is positioned may include outputting a screen divided into a plurality of areas to a display, if a touch is detected by the touch sensor, receiving the touch as an event of an area, which corresponds to a location at which the touch is detected, from among the plurality of areas, and performing a specified operation in response to the event.

In another embodiment of the present disclosure, the specified operation may include an operation of selecting the area corresponding to the location at which the touch is detected.

The term "module" used in the present disclosure may represent, for example, a unit including one or more combinations of hardware, software and firmware. The term "module" may be interchangeably used with the terms "unit", "logic", "logical block", "component" and "circuit". The "module" may be a minimum unit of an integrated component or may be a part thereof. The "module" may be a minimum unit for performing one or more functions or a part thereof. The "module" may be implemented mechanically or electronically. For example, the "module" may include at least one of an application-specific IC (ASIC) chip, a field-programmable gate array (FPGA), and a programmable-logic device for performing some operations, which are known or will be developed.

At least a part of an apparatus (e.g., modules or functions thereof) or a method (e.g., operations) according to various embodiments may be, for example, implemented by instructions stored in a computer-readable storage media in the form of a program module. The instruction, when executed by a processor (e.g., the processor 120), may cause the one or more processors to perform a function corresponding to the instruction. The computer-readable storage media, for example, may be the memory 130.

A computer-readable recording medium may include a hard disk, a floppy disk, a magnetic media (e.g., a magnetic tape), an optical media (e.g., a compact disc read only memory (CD-ROM) and a digital versatile disc (DVD), a magneto-optical media (e.g., a floptical disk)), and hardware devices (e.g., a read only memory (ROM), a random-access memory (RAM), or a flash memory). Also, a program instruction may include not only a mechanical code such as things generated by a compiler but also a high-level language code executable on a computer using an interpreter. The above hardware unit may be configured to operate via one or more software modules for performing an operation according to various embodiments, and vice versa.

A module or a program module according to various embodiments may include at least one of the above elements, or a part of the above elements may be omitted, or additional other elements may be further included. Operations performed by a module, a program module, or other elements according to various embodiments may be executed sequentially, in parallel, repeatedly, or in a heuristic method. In addition, some operations may be executed in different sequences or may be omitted. Alternatively, other operations may be added.

According to embodiments of the present disclosure, it may be possible to provide various UIs and UXs based on a touch on opposite side surfaces of an electronic device. Since a user is provided with an intended function by touching a side surface of the electronic device, the user may manipulate the electronic device with only one hand gripping the electronic device.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a touchscreen display positioned on a front surface of the electronic device;
a touch sensor positioned on one side surface of the electronic device; and
at least one processor electrically connected with the touchscreen display and the touch sensor,
wherein the at least one processor is configured to:
control the touchscreen display to output a screen divided into a plurality of areas,
if a touch is detected by the touch sensor, receive the touch as an event of an area which corresponds to a location at which the touch is detected, from among the plurality of areas, and
perform a specified operation in response to the event.

2. The electronic device of claim 1, wherein the touch sensor comprises a length corresponding to a vertical length of the touchscreen display.

3. The electronic device of claim 1, wherein the area corresponding to the location at which the touch is detected is aligned in parallel with the location, at which the touch is detected, in a horizontal direction of the touchscreen display.

4. The electronic device of claim 1, wherein the plurality of areas is arranged in a vertical direction of the touchscreen display.

5. The electronic device of claim 1, wherein the touch includes at least one of a tap, a double tap, a touch-down of a specified time or more, or a touch swiping in a specified direction.

6. The electronic device of claim 1, further comprising:
a pressure sensor positioned to be overlaid with the touch sensor,
wherein the pressure sensor is configured to detect pressure of the touch, and
wherein the touch includes a touch of a specified pressure.

7. The electronic device of claim 1, wherein the specified operation includes an operation of selecting the area which corresponds to the location at which the touch is detected.

8. The electronic device of claim 1, wherein the specified operation includes an operation of selecting a graphic user interface (GUI) object included in the area which corresponds to the location at which the touch is detected.

9. The electronic device of claim 1, wherein the specified operation includes an operation of scrolling at least one object included in the area which corresponds to the location at which the touch is detected.

10. The electronic device of claim 1, wherein the specified operation includes an operation of rearranging a plurality of objects included in a partial area of the screen in a specified order.

11. The electronic device of claim 1, further comprising:
a housing forming at least a portion of the electronic device,
wherein one side surface of the electronic device, on which the touch sensor is positioned, comprises one side surface of the housing.

12. The electronic device of claim 1,
wherein the touchscreen display further extends to the one side surface from the front surface, and
wherein the touch sensor is positioned to be overlaid with the touchscreen display extended to the one side surface.

13. A method for a user interface of an electronic device including a pressure sensor positioned on a side surface thereof, the method comprising:
controlling a touchscreen display to display a screen,
allowing the pressure sensor to detect pressure exerted by an external object on at least a portion of the side surface, and
upon the detection of the pressure, scroll at least a portion of the displayed screen in a specified direction.

14. The method of claim 13, the method further comprising:
determining the at least a portion of the displayed screen, based at least partly on the at least a portion of the side surface against which the pressure is exerted by the external object.

15. The method of claim 13, wherein the displayed screen includes a screen displayed by execution of a specified application, and
wherein the specified application includes at least one of a home application, an e-book reader application, a web browser application, a message application, or a contacts application.
